# EUROPÄISCHE PATENTSCHRIFT

(11) **EP 3 856 543 B1**
(45) Veröffentlichungstag und Bekanntmachung des Hinweises auf die Patenterteilung: **06.11.2024**
(21) Anmeldenummer: 19773014.6
(22) Anmeldetag: 16.09.2019
(51) Int. Cl.: B60D 1/01, B60D 1/30, B60D 1/62

(54) **SENSORVORRICHTUNG MIT EINER SCHWENKLAGERANORDNUNG**
SENSOR DEVICE HAVING A PIVOT BEARING ARRANGEMENT
DISPOSITIF DE DÉTECTION AVEC UN ARRANGEMENT DE PALIER DE PIVOTEMENT

(30) Priorität: 25.09.2018 DE 102018123644
(43) Veröffentlichungstag der Anmeldung: 04.08.2021
(60) Teilanmeldung: 24193698.8
(73) Patentinhaber: WESTFALIA - Automotive GmbH, 33378 Rheda-Wiedenbrück (DE)
(72) Erfinder: PEITZ, Jürgen, 33449 Langenberg (DE); STIEBEN, Kevin, 33397 Rietberg (DE)
(74) Vertreter: Patentanwälte Bregenzer und Reule Partnerschaftsgesellschaft mbB
(86) Internationale Anmeldenummer: PCT/EP2019/074659
(87) Internationale Veröffentlichungsnummer: WO 2020/064392

(56) Entgegenhaltungen:
- EP-A1- 2 719 555
- EP-A1- 2 899 101
- EP-A2- 0 433 858
- DE-A1- 102010 010 242
- DE-A1- 102016 012 663
- DE-A1- 4 021 717
- US-A1- 2015 102 583
- US-A1- 2018 057 052

## Beschreibung

Die Erfindung betrifft eine Sensorvorrichtung für eine Zugfahrzeugkupplung oder als Bestandteil einer Zugfahrzeugkupplung, mit der ein Anhängerfahrzeug, insbesondere ein Sattelauflieger, an ein Zugfahrzeug, insbesondere einen Lastkraftwagen, ankuppelbar ist, wobei die Zugfahrzeugkupplung ein Kuppelelement zur lösbaren Kupplung eines Kuppelgegenelements aufweist, die an dem Zugfahrzeug und dem Anhängerfahrzeug befestigt oder befestigbar sind und im aneinander gekuppelten Zustand ein Gelenk bildend um mindestens eine Gelenk-Drehachse relativ zueinander drehbar sind, wobei die Sensorvorrichtung einen bezüglich des Kuppelelements um eine Mitnahme-Drehachse an einem Lagerkörper drehbar gelagerten und von dem Kuppelgegenelement bei einer Drehung um die mindestens eine Gelenk-Drehachse um die Mitnahme-Drehachse dreh-mitnehmbaren Mitnehmer zur Erfassung einer Drehung des Kuppelgegenelements relativ zu dem Kuppelelement um die mindestens eine Gelenk-Drehachse aufweist, und wobei die Sensorvorrichtung mindestens einen Sensor zur Erfassung einer jeweiligen Drehposition des Mitnehmers relativ zu dem Lagerkörper bezüglich der Mitnahme-Drehachse aufweist. Die Erfindung betrifft ferner eine Zugfahrzeugkupplung mit einer solchen Sensoranordnung.

Eine derartige Sensorvorrichtung ist beispielsweise DE 40 21 717 A1 beschrieben.

Eine weitere Sensorvorrichtung ist beispielsweise in EP 2 415 620 A1 beschrieben. Der Mitnehmer ist als ein Ring ausgestaltet, der am Außenumfang eines als Kugelkopf ausgestalteten Kuppelelementes drehbar gelagert ist. Das Kuppelgegenelement ist in diesem Fall eine Kugelkopf-Aufnahme, eine sogenannte Kugelpfanne, die auf die Kupplungskugel und somit das Kuppelelement aufgesetzt wird und den Mitnehmer drehbetätigt. Durch die Drehlagerung an dem Kugelkopf hat der Drehmitnehmer einen Drehfreiheitsgrad um die Mitnahme-Drehachse und erfasst somit eine Winkelstellung des Anhängers relativ zum Zugfahrzeug um eine Hochachse oder Z-Achse. Beim Ankuppeln des gegen Kuppelelements an das Kuppelelement wird der Mitnehmer mechanisch belastet.

Es ist daher die Aufgabe der vorliegenden Erfindung, eine demgegenüber verbesserte Sensorvorrichtung bereit zu stellen.

Zur Lösung der Aufgabe ist bei einer Sensorvorrichtung der eingangs genannten Art vorgesehen, dass der Mitnehmer bezüglich des Kuppelelements zur Bereitstellung oder Aufrechterhaltung einer Mitnahmekopplung zu dem Kuppelgegenelement mit einem translatorischen, insbesondere linearen, Bewegungsfreiheitsgrad anhand einer Schwenklageranordnung beweglich gelagert ist, wobei der Mitnehmer zu einer Verstellung mit dem translatorischen Bewegungsfreiheitsgrad um mindestens zwei Schwenkachsen schwenkt. Zur Lösung der Aufgabe ist ferner eine Zugfahrzeugkupplung mit einer derartigen Sensorvorrichtung vorgesehen.

Es ist ein Grundgedanke, dass anstelle einer Schiebelagerung eine Schwenklagerung vorgesehen ist, um den Mitnehmer mit einem translatorischen, insbesondere linearen, Bewegungsfreiheitsgrad beweglich zu lagern. Eine Schwenklagerung hat beispielsweise den Vorteil, dass sie mechanisch wesentlich robuster ist. Zudem neigt eine Schwenklagerung weniger zu einer Verspannung oder Verklemmung, die einer Beweglichkeit des Lagerkörpers relativ zur Zugfahrzeugkupplung entgegensteht und somit die Mitnahmekopplung zwischen Mitnehmer und Kuppelgegenelement behindert oder gar unmöglich macht.

Die translatorische Bewegung kann eine geradlinige Bewegung in einer Grund-Bewegungsrichtung sein, aber auch eine Bewegung, die zusätzlich noch eine Bewegungskomponente oder Richtungskomponente quer zu der Grund-Bewegungsrichtung aufweist.

Der translatorische Bewegungsfreiheitsgrad, vorzugsweise mehrere oder alle translatorischen Bewegungsfreiheitsgrade, ermöglicht oder ermöglichen vorzugsweise eine geradlinige Translation. Die translatorischen Bewegungsfreiheitsgrade ermöglichen können auch überlagerte Verschiebebewegungen, insbesondere überlagerte geradlinige Verschiebebewegungen, des Mitnehmers und/oder des Lagerkörpers, relativ zu dem Kuppelelement.

Zusätzlich zu dem mindestens einen translatorischen Bewegungsfreiheitsgrad ist es aber vorteilhaft, wenn der Mitnehmer um zumindest einen rotatorischen Bewegungsfreiheitsgrad relativ zu dem Kuppelelement beweglich gelagert ist, wobei der rotatorische Bewegungsfreiheitsgrade verschieden von der Drehbarkeit um die Mitnahme-Drehachse ist.

Ein bevorzugtes Konzept sieht vor, dass der Mitnehmer zu der Verstellung und/oder bei der Verstellung mit dem translatorischen Bewegungsfreiheitsgrad um mindestens zwei, vorzugsweise drei oder weitere Schwenkachsen der Schwenklageranordnung schwenkt. Bei der erfindungsgemäßen Bereitstellung von zwei Schwenkachsen ist beispielsweise schon eine Parallelverstellung derart möglich, dass eine Mitnahmefläche, mit der der Mitnehmer in Berührkontakt mit dem Kuppelgegenelement beim Betrieb der Sensorvorrichtung ist, beibehalten wird.

Ein bevorzugtes Konzept sieht vor, dass mindestens zwei Schwenkachsen, vorzugsweise drei oder alle Schwenkachsen, der Schwenklageranordnung zur Bereitstellung des translatorischen Bewegungsfreiheitsgrades zueinander parallele Schwenkachsen sind.

Bei der Verstellung mit dem translatorischen oder linearen Bewegungsfreiheitsgrad wird der Mitnehmer entlang einer Längsachse verstellt. Die Längsachse verläuft vorzugsweise quer, beispielsweise rechtwinkelig quer, zu der mindestens einen Schwenkachse oder den Schwenkachsen der Schwenklageranordnung.

Es versteht sich, dass mindestens zwei, insbesondere mehrere translatorische Bewegungsfreiheitsgrade, vorzugsweise alle translatorischen Bewegungsfreiheitsgrade, die der Mitnehmer bezüglich des Kuppelgegenelements aufweisen kann, durch die Schwenklageranordnung oder durch mehrere Schwenklageranordnungen realisierbar sind.

Der translatorische Bewegungsfreiheitsgrad wird hier in erster Linie und/oder vorteilhaft als ein linearer Bewegungsfreiheitsgrad verstanden oder ein Bewegungsfreiheitsgrad, der zumindest eine lineare Verstellkomponente oder Richtungskomponente ermöglicht. Der lineare Bewegungsfreiheitsgrad umfasst vorzugsweise mindestens eine lineare Bewegungskomponente parallel zur Mitnahme-Drehachse oder verläuft parallel zur Mitnahme-Drehachse.

Eine vorteilhafte Ausgestaltung stellt die folgende Maßnahme dar:
Vorzugsweise ist der Mitnehmer ausschließlich anhand von Schwenklagern bezüglich des Kuppelgegenelements beweglich gelagert. Bevorzugt sind dabei mindestens zwei Schwenklager vorhanden.

Die Schwenklageranordnung weist zweckmäßigerweise mindestens ein nur um eine Drehachse schwenkendes Schwenklager auf.

Die Schwenklageranordnung kann auch mindestens ein mehrachsig schwenklagerndes Gelenk, z.B. ein Kardangelenk, ein Kugelgelenk oder dergleichen, umfassen.

Eine ebenfalls vorteilhafte Ausgestaltung stellt folgendes dar:
Bevorzugt ist der Mitnehmer anhand mindestens eines Viergelenks und/oder eines Gelenk-Parallelogramms bezüglich des Kuppelgegenelements beweglich gelagert. Anhand des Viergelenks ist der Mitnehmer und/oder der den Mitnehmer lagernde Lagerkörper beispielsweise in der Art eines Parallelogramms relativ zu dem Kuppelelement verstellbar. Das Viergelenk umfasst beispielsweise Gelenkstäbe, an deren Längsendbereichen Schwenkgelenke, insbesondere mehrachsig schwenkende Gelenke, vorzugsweise Kugelgelenke, angeordnet sind.

Das Viergelenk kann beispielsweise an einem Schwenklager angeordnet sein, so dass das Viergelenk selbst beispielsweise eine der Schwenkachsen, die einen translatorischen Bewegungsfreiheitsgrad realisieren, bereitstellt, während die andere Schwenkachse von dem Schwenklager bereitgestellt wird.

Eine weitere vorteilhafte Ausgestaltung stellt dar, wenn die Sensorvorrichtung eine Magnetanordnung mit mindestens einem Magneten zur Bereitstellung einer den Mitnehmer in Richtung des Kuppelgegenelements beaufschlagenden magnetischen Anziehungskraft aufweist, wobei vorgesehen ist, dass der Mitnehmer bei Nutzung der Sensorvorrichtung, also im Betriebszustand, an dem Kuppelgegenelement ausschließlich oder im Wesentlichen durch den mindestens einen Magneten gehalten ist. Zusätzlich wird noch der Lagerkörper durch den Magneten an dem Kuppelgegenelement gehalten. Auch der Sensor wird durch den Magneten an dem Kuppelgegenelement gehalten. Mithin wird also eine Baueinheit umfassend den Sensor sowie den Mitnehmer durch den Magneten an dem Kuppelgegenelement gehalten.

Ein Vorteil ist dabei, dass eine Relativposition des mindestens einen Sensors und des Mitnehmers abgesehen von der Drehbarkeit um die Mitnahme-Drehachse stets dieselbe bleibt. Somit ist ein Erfassungsbereich des Sensors relativ zu Magneten stets gleich.

Es ist allerdings möglich, dass der Mitnehmer und/oder der Lagerkörper zusätzlich zu der Magnetkraft durch eine Feder oder dergleichen andere Kraft in Richtung des Kuppelgegenelements beaufschlagt sind. Allerdings ist die Kraft des Magneten stärker als diejenige beispielsweise der Anfederung.

Ein weiteres vorteilhaftes Konzept sieht vor, dass der Lagerkörper mit drei zueinander winkeligen translatorischen oder linearen Bewegungsfreiheitsgraden sowie mit zwei von der Drehbarkeit um die Mitnahme-Drehachse verschiedenen
Dreh-Bewegungsfreiheitsgraden bezüglich des Kuppelelements beweglich gelagert und in Bezug auf die Mitnahme-Drehachse bezüglich des Kuppelelements drehfest festgelegt ist. Somit kann also der Lagerkörper sämtliche Bewegungen außer der Bewegung um die Mitnahme-Drehachse mitmachen. Zur Bereitstellung der vorgenannten translatorischen Bewegungsfreiheitsgrade, zumindest eines translatorischen Bewegungsfreiheitsgrades, ist vorzugsweise eine Schwenklageranordnung mit einer Beweglichkeit ausschließlich um Schwenkachsen vorgesehen.

Es ist vorteilhaft, wenn der Mitnehmer bezüglich des Kuppelelements zur Bereitstellung oder Aufrechterhaltung einer Mitnahmekopplung zu dem Kuppelgegenelement mit mindestens einem von der Drehbarkeit um die Mitnahme-Drehachse verschiedenen Bewegungsfreiheitsgrad, vorteilhaft mit mehreren von der Drehbarkeit um die Mitnahme-Drehachse verschiedenen Bewegungsfreiheitsgraden, beweglich gelagert ist.

Vorteilhaft ist vorgesehen, dass der mindestens eine von der Drehbarkeit um die Mitnahme-Drehachse verschiedene Bewegungsfreiheitsgrad mindestens einen Drehfreiheitsgrad und/oder mindestens einen linearen Bewegungsfreiheitsgrad oder Verschiebe-Freiheitsgrad umfasst.

Vorteilhaft ist es, wenn eine Verschiebeachse des Verschiebe-Freiheitsgrads und eine Schwenkachse des mindestens einen Drehfreiheitsgrads einander schneiden.

Es ist eine Grundgedanke dabei, dass der Mitnehmer nicht nur um die Mitnahme-Drehachse drehbar bezüglich des Kuppelelementes gelagert ist, sondern auch mit einem oder mehreren weiteren Bewegungsfreiheitsgraden, die sich von der Drehbarkeit um die Mitnahme-Drehachse bzw. dem Drehfreiheitsgrad um die Mitnahme-Drehachse unterscheiden. Dadurch kann der Mitnehmer sozusagen schwimmend in Anlage oder Mitnahmekopplung zu dem Kuppelgegenelement, beispielsweise einer Zugkugelkupplung, gebracht werden.

Der mindestens eine Bewegungsfreiheitsgrad zur Bereitstellung der Mitnahmekopplung oder Aufrechterhaltung derselben weist zweckmäßigerweise mindestens einen linearen Bewegungsfreiheitsgrad auf. Somit kann also beispielsweise der Mitnehmer bezüglich oder parallel zu der Mitnahme-Drehachse zu dem Kuppelgegenelement hin oder von diesem weg beweglich an dem Kuppelelement oder bezüglich des Kuppelelementes gelagert sein. Die Verschiebeachse verläuft zweckmäßigerweise parallel oder in einem Winkel von weniger als 90° zu der Mitnahme-Drehachse. Die lineare Verstellachse kann zudem im Rahmen des mindestens einen Drehfreiheitsgrads um eine Drehachse oder Schwenkachse schwenkbar sein.

Vorzugsweise ist vorgesehen, dass der Mitnehmer bezüglich des Kuppelelementes entlang mindestens einer Verschiebeachse oder Linearachse verschieblich gelagert ist, beispielweise entlang einer Linearachse oder Verschiebeachse, die zu der Mitnahme-Drehachse koaxial oder parallel ist.

Wenn der Mitnehmer zusätzlich zu der Drehbarkeit um die Mitnahme-Drehachse ausschließlich entlang einer Linearachse oder Verschiebeachse verschieblich gelagert ist, ist vorzugsweise vorgesehen, dass er eine Aufgleitschräge und/oder mindestens eine federnde oder elastische Komponente aufweist. Der Mitnehmer kann dann beispielsweise bei einem Ankuppeln des Kuppelgegenelements an das Kuppelelement entlang der Linearachse oder Verschiebeachse ausweichen und zudem noch quer zu der Linearachse oder Verschiebeachse nachgeben, um dem Kuppelgegenelement eine Bewegung in Kontakt mit dem Mitnehmer zu ermöglichen oder zu erleichtern, so dass der Mitnehmer und das Kuppelgegenelement in Mitnahmekontakt sind oder gelangen.

Der Lagerkörper ist vorteilhaft verdrehfest bezüglich der Mitnahme-Drehachse anhand einer Verdrehsicherung an einer Halteeinrichtung, die zum Halten der Sensorvorrichtung an der Zugfahrzeugkupplung vorgesehen ist, gehalten.

Vorteilhaft ist ferner, wenn der Mitnehmer mindestens eine außerhalb des Gelenks liegende Mitnahmefläche, insbesondere eine Reibschlussfläche, Formschlussfläche oder dergleichen, zur Mitnahme durch das Kuppelgegenelement aufweist. Beispielsweise ist die Mitnahmefläche außerhalb von Gelenkflächen des Kuppelelements und des Kuppelgegenelements angeordnet, mit denen das Kuppelelement und das Kuppelgegenelement aneinander entlang gleiten. Die Mitnahmefläche ist ferner vorteilhaft neben dem Kuppelelement und/oder Kuppelgegenelement angeordnet.

Der den Mitnehmer um die Mitnahme-Drehachse lagernde Lagerkörper ist beispielsweise an nur einer einzigen Lagerstelle an einer bezüglich der Zugfahrzeugkupplung ortsfesten Komponente, beispielsweise einem Stützkörper der Zugfahrzeugkupplung, bezüglich des mindestens einen Bewegungsfreiheitsgrades beweglich gelagert, beispielsweise um eine Verschiebeachse verschieblich und/oder um mindestens eine Schwenkachse oder Drehachse schwenkbar oder drehbar. Diese Lagerstelle kann in der Achslinie der Mitnahme-Drehachse liegen oder koaxial zu derselben sein. Beispielsweise kann die Verschiebeachse koaxial zur Mitnahme-Drehachse sein. Es ist aber auch möglich, dass diese einzige Lagerstelle exzentrisch zur Mitnahme-Drehachse ist. So kann beispielsweise ein Lagerarm, vor den der Lagerkörper vorsteht, an einer zu der Mitnahme-Drehachse exzentrischen Stelle der Zugfahrzeugkupplung gelagert sein.

Es ist aber auch möglich, dass der den Mitnehmer lagernden Lagerkörper an mindestens zwei, vorzugsweise mindestens drei oder vier Lagerstellen an einer bezüglich der Zugfahrzeugkupplung ortsfesten Komponente in Bezug auf den mindestens einen Bewegungsfreiheitsgrad beweglich gelagert ist. An den Lagerstellen können beispielsweise Schwenklager und/oder Schiebelager vorgesehen sein. Beispielsweise sind die Lagerstellen in Eckbereichen Polygons, insbesondere eines Dreiecks oder Viereckes, vorgesehen, zwischen denen der Lagerkörper angeordnet ist.

Vorzugsweise weist die Sensorvorrichtung einen Stellantrieb zur Verstellung zumindest des Mitnehmers zwischen einer näher zu dem Kuppelgegenelement hin verstellten Mitnahmestellung und einer von dem Kuppelgegenelement entfernteren Freigabestellung aufweist, wobei der Stellantrieb anhand einer Steuerungseinrichtung zur Verstellung des Mitnehmers ansteuerbar ist. Zur Lösung der Aufgabe ist ferner eine Zugfahrzeugkupplung mit einer derartigen Sensorvorrichtung vorgesehen.

Selbstverständlich ist es möglich, dass das nicht nur der Mitnehmer, sondern auch den Lagerkörper, an dem der Mitnehmer angeordnet ist, zwischen der Mitnahmestellung und der Freigabestellung verstellt. Dabei ist möglich, dass der Stellantrieb lediglich zur Verstellung von der Freigabestellung in die Mitnahmestellung oder von der Mitnahmestellung in die Freigabestellung oder für beides geeignet und/oder vorgesehen ist.

Des Weiteren kann der Stellantrieb nicht nur den Mitnehmer als solchen, sondern beispielsweise auch den Lagerkörper, gegebenenfalls auch ein Sensormodul, welches sowohl den Lagerkörper als auch den Mitnehmerkörper und den Sensor umfasst, zwischen der Mitnahmestellung und der Freigabestellung verstellen.

Es ist möglich, dass der Mitnehmer in der Freigabestellung von dem Kuppelgegenelement entfernt ist, aber auch, dass er noch Kontakt mit dem Kuppelgegenelement hat.

Jedenfalls wird die mechanische Belastung des Mitnehmers beispielsweise bei einem Ankuppelvorgang verringert, wenn dieser beispielsweise durch den Stellantrieb in der Freigabestellung gehalten wird.

Bevorzugt ist es, wenn die Steuerungseinrichtung zur Ansteuerung des Stellantriebs derart ausgestaltet ist, dass der Stellantrieb den Mitnehmer zwischen der Freigabestellung und der Mitnahmestellung verstellt, wenn das Kuppelelement mit dem Kuppelgegenelement in Eingriff ist, beispielsweise an- oder eingekuppelt ist. Somit kann also zunächst beispielsweise ein Sattelzapfen in eine entsprechende Aufnahme eingeführt werden, bevor der Stellantrieb den Mitnehmer von der Freigabestellung in die Mitnahmestellung verstellt. Auch umgekehrt ist es vorteilhaft, wenn der Mitnehmer durch den Stellantrieb von der Mitnahmestellung in die Freigabestellung verstellt wird, so lange noch das Kuppelelement mit dem Kuppelgegenelement in Eingriff ist, also die Kupplung noch vorhanden ist.

Bevorzugt ist es, wenn der Mitnehmer in der Mitnahmestellung in Kontakt mit dem Kuppelgegenelement und in der Freigabestellung außer Kontakt mit dem Kuppelgegenelement ist. Es ist aber auch möglich, dass der Mitnehmer in der Freigabestellung mit geringerer Kraft in Richtung des Kuppelgegenelementes beaufschlagt ist als in der Mitnahmestellung. Auch dann ist es möglich, dass Kuppelelement und Kuppelgegenelement leicht außer Eingriff oder in Eingriff gebracht werden können, als dann, wenn der Mitnehmer noch in der Mitnahmestellung ist.

Der Stellantrieb kann beispielsweise einen Stellkörper zum Verstellen des Mitnehmers und/oder des Lagerkörpers zwischen der Mitnahmestellung und der Freigabestellung aufweisen. Ohne weiteres ist es also möglich, dass der Stellantrieb lediglich den Mitnehmer anhand des Stellkörpers, aber auch den Mitnehmer und den Lagerkörper, von der Freigabestellung in die Mitnahmestellung oder umgekehrt betätigt. Der Stellkörper umfasst beispielsweise einen oder mehrere Stellarme. Bevorzugt ist es, wenn der Stellkörper mindestens einen gabelartigen Arm aufweist. Des Weiteren kann der Stellkörper zu einem Untergreifen oder Hintergreifen des Lagerkörpers oder Mitnehmers ausgestaltet sein.

Der Stellkörper ist vorzugsweise nach der Verstellung des Mitnehmers oder des Lagerkörpers in eine von dem Mitnehmer oder dem Lagerkörper entfernte Ruhestellung verstellbar, in welcher der Stellkörper eine Beweglichkeit des Mitnehmers oder des Lagerkörpers nicht oder weniger behindert. Beispielsweise ist der Lagerkörper oder Mitnehmer mit einem von der Drehbarkeit um die Mitnahme-Drehachse verschiedenen Bewegungsfreiheitsgrad freier beweglich, wenn der Stellkörper in der Ruhestellung ist.

Bevorzugt ist es, wenn der Stellkörper in der Ruhestellung außer Eingriff mit dem Mitnehmer und/oder dem Lagerkörper ist. Mithin ist es also vorteilhaft, wenn der Mitnehmer in der Ruhestellung außer Eingriff mit dem Mitnehmer oder dem Lagerkörper ist. Es ist allerdings möglich, dass ein stützender Abschnitt des Stellkörpers außer Eingriff mit dem Mitnehmer oder Lagerkörper ist, während noch eine Verbindung mit einem biegeflexiblen Zugorgan zwischen Stellkörper und Mitnehmer oder Lagerkörper vorhanden ist, so dass an sich der Stellkörper eine Bewegung des Mitnehmers oder Lagerkörpers nicht mehr behindert, allenfalls durch die Kopplung anhand des biegeflexiblen Zugorgans, beispielsweise eines Seilzuges, eines Riemens oder dergleichen. Anhand des Seilzuges oder Riemens kann jedoch der Stellkörper den Mitnehmer oder Lagerkörper beispielsweise aus der Mitnahmestellung in die Freigabestellung oder umgekehrt betätigen.

Der Stellantrieb umfasst beispielsweise einen elektrischen Antriebsmotor. Aber auch ein Fluidantrieb, beispielsweise ein Druckluft-Antrieb, ein Federantrieb oder dergleichen oder auch Kombinationen davon sind ohne weiteres möglich. So kann beispielsweise ein Druckluftantrieb mit integrierter Feder vorhanden sein, die den Mitnehmer oder Lagerkörper regelmäßig in die Mitnahmestellung beaufschlagt. Durch Betätigung mit Druckluft oder einem sonstigen Fluid, kann der Druckluftantrieb aus der Mitnahmestellung in die Freigabestellung betätigbar sein.

Der Stellantrieb ist vorzugsweise so ausgestaltet, dass er den Mitnehmer und/oder den Lagerkörper anhand einer Federanordnung dauerhaft in Richtung der Mitnahmestellung belastet. Allerdings ist es möglich, dass die Federanordnung sozusagen inaktiv geschaltet wird, nämlich beispielsweise elektromotorisch oder durch eine sonstige Betätigung, so dass der Mitnehmer oder der Lagerkörper von der Mitnahmestellung in die Freigabestellung betätigt werden. Vorteilhaft ist beispielsweise eine Inaktivierungseinrichtung zur Inaktivierung der Federanordnung derart, dass der Mitnehmer von der Mitnahmestellung in die Freigabestellung verstellbar ist. Die Inaktivierungseinrichtung umfasst beispielsweise ein manuell und/oder motorisch, z.B. durch einen insbesondere elektrischen Antrieb der Inaktivierungseinrichtung, betätigbares oder betätigtes Halteelement zum Halten der Federanordnung in einer der Freigabestellung zugeordneten Inaktivierungsstellung. Das Halteelement kann beispielsweise eine Feder der Federanordnung in einer Kompressionsstellung als eine den Mitnehmer nicht in die Mitnahmestellung belastende Inaktivierungsstellung umfassen.

Die Steuerungseinrichtung kann eine mechanische Steuerungseinrichtung sein. Mithin kann also eine mechanische Betätigung zum Auslösen des Stellantriebs vorgesehen sein.

Beispielsweise umfasst die Steuerungseinrichtung eine Rasteinrichtung oder wird durch eine Rasteinrichtung gebildet, die durch eine Betätigung den Stellantrieb zu der Verstellung zumindest des Mitnehmers zwischen der Mitnahmestellung und der Freigabestellung betätigt. Beispielsweise ist der Stellantrieb anhand der Rasteinrichtung verrastet, so dass er in der Freigabestellung bleibt. Wenn die Rasteinrichtung betätigt wird, kann sie den Stellantrieb zu einer Verstellung von der Freigabestellung in die Mitnahmestellung freigeben.

Beispielsweise ist die Rasteinrichtung durch das Kuppelgegenelement und/oder eine Verriegelungseinrichtung der Zugfahrzeugkupplung, betätigbar. So kann beispielsweise ein Verriegelungskörper, insbesondere ein Schließkörper oder Haltekörper, der das Kuppelgegenelement am Kuppelelement hält, zur Betätigung der Rasteinrichtung vorgesehen sein.

Die Steuerungseinrichtung kann aber auch eine elektrische Steuerungseinrichtung zur Ansteuerung des Stellantriebs umfassen oder dadurch gebildet sein. Selbstverständlich ist eine Kombination aus mechanischer Ansteuerung, beispielsweise der Verrastung, und einer elektrische Steuerung möglich.

Die Steuerungseinrichtung umfasst zweckmäßigerweise mindestens einen Sensor, beispielsweise eine optischen Sensor, einen Tastsensor, einen kapazitiven Sensor oder dergleichen, wobei die Steuerungseinrichtung anhand eines Sensorsignals des mindestens einen Sensors den Stellantrieb ansteuert. So kann beispielsweise der Sensor zur Erfassung einer Relativposition des Kuppelgegenelementes bezüglich des Kuppelelementes vorgesehen sein. Wenn also das Kuppelelement und das Kuppelgegenelement in Eingriff sind, kann dies vom Sensor erfasst werden, wodurch die Steuerungseinrichtung zum Ansteuern des Stellantriebs aktiviert wird. Weiterhin ist es möglich, dass der Sensor zur Erfassung einer Position einer Verriegelungseinrichtung der Zugfahrzeugkupplung ausgestaltet ist. Der Sensor kann also beispielsweise dann, wenn die Verriegelungseinrichtung in die Verriegelungsstellung verstellt wird, den Stellantrieb zur Verstellung von der Freigabestellung in die Mitnahmestellung ansteuern. Wenn hingegen die Verriegelungseinrichtung der Zugfahrzeugkupplung gelöst wird, steuert sie den Stellantrieb zur Verstellung von der Mitnahmestellung in die Freigabestellung an.

Der Stellantrieb ist vorzugsweise anhand mindestens eines biegeflexiblen Zugorgans, beispielsweise eines Riemens, eines Seiles oder dergleichen, mit dem Lagerkörper zum Verstellen zwischen der Mitnahmestellung und der Freigabestellung verbunden. Der Stellantrieb kann beispielsweise ein Riemengetriebe oder Seilzuggetriebe aufweisen. Das biegeflexible Zugorgan behindert beispielsweise eine Bewegung des Lagerkörpers oder Mitnehmers selbst dann nicht, wenn es kraftfrei oder mit wenig Kraft belastet ist.

Der Sensor ist beispielsweise ein magnetischer Sensor, ein Hall-Sensor oder dergleichen. Es kann sich bei dem Sensor aber auch um einen optischen Sensor, kapazitiven Sensor, induktiven Sensor oder dergleichen handeln. Kombinationen verschiedener und/oder physikalisch verschieden erfassender Sensoren sind möglich.

Bevorzugt ist, wenn der Mitnehmer an einem vom dem Kuppelelement separaten Lagerkörper um die Mitnahme-Drehachse drehgelagert ist oder der Lagerkörper von dem Kuppelelement separat ist. Der Lagerkörper eignet sich beispielsweise zur nachträglichen Ausrüstung einer an sich vorhandenen Anhängekupplung oder Zugfahrzeugkupplung.

Das Kuppelelement umfasst beispielsweise eine Kupplungskugel, eine Kupplungsaufnahme oder dergleichen oder ist dadurch gebildet. An die Kupplungskugel oder an ein sonstiges positives Formschlusselement kann beispielsweise eine Anhängerkupplung eines Anhängers angehängt werden. Die Kupplungsaufnahme, beispielsweise ein Kupplungsmaul, eignet sich zur Aufnahme positiven Formschlusselements der Anhängerkupplung des Anhängers oder eines Sattelaufliegers, beispielsweise eines sogenannten Königszapfens.

Zur Lagerung des Mitnehmers bezüglich des von der Drehbarkeit um die Mitnahme-Drehachse verschiedenen Bewegungsfreiheitsgrads ist vorteilhaft eine Lagereinrichtung vorgesehen. Die Lagereinrichtung kann beispielsweise den Lagerkörper beweglich lagern, an dem der Mitnehmer um die Mitnahme-Drehachse drehgelagert ist. Die Lagereinrichtung ist beispielsweise ortsfest an der Zugfahrzeugkupplung angeordnet. Lagerflächen der Lagereinrichtung sind vorteilhaft stets in der Art von Lagerflächen oder Kontaktflächen eines Gleitlagers oder Wälzlagers in Kontakt miteinander.

Die Lagereinrichtung umfasst vorteilhaft mindestens ein Schiebelager und/oder ein Schwenklager. Bevorzugt ist eine Konfiguration, bei der ein Schiebelager in ein Schwenklager integriert ist, d. h. dass beispielsweise ein Schiebe-Lagerelement schiebebeweglich in einem Schwenk-Lagerelement aufgenommen ist, welches seinerseits schwenkbar an einer Schwenklageraufnahme gelagert ist. Die Schwenklageraufnahme kann ortsfest bezüglich des Kuppelelements sein. Es ist aber auch möglich, dass das Schiebe-Lagerelement bezüglich des Kuppelelements ortsfest ist und die Schwenklageraufnahme an einem Körper angeordnet ist, an dem der Mitnehmer um die Mitnahme-Drehachse drehbar gelagert ist, beispielsweise einem Träger einer noch zu beschreibenden Halteeinrichtung, dem Lagerkörper oder dergleichen.

Ein Schiebelagerkörper der Lagereinrichtung ist vorzugsweise anhand eines Elastomerkörpers an einer ortsfesten Komponente der Zugfahrzeugkupplung festgelegt, sodass der Schiebelagerkörper in mindestens einer Richtung quer zu seiner Schiebeachse bezüglich der ortsfesten Komponente auslenkbar ist. Der Schiebelagerkörper umfasst beispielsweise eine Lageraufnahme, einen Lagerachskörper oder dergleichen, an dem ein weiterer Lagerkörper bezüglich der Schiebeachse längsverschieblich gelagert ist. Somit kann die Schiebeachse bezüglich der ortsfesten Komponente der Zugfahrzeugkupplung kippen oder schwenken, vorzugsweise für einen Toleranzausgleich.

Es ist möglich, dass der Mitnehmer an einem Kupplungsträger oder Kupplungsarm, an dem das Kuppelelement angeordnet ist, gelagert ist. Der Kupplungsträger weist beispielsweise eine Lageraufnahme oder eine sonstige Lagerkontur für den Mitnehmer auf. Der Kupplungsträger bildet also den Lagerkörper oder trägt den Lagerkörper.

Ein Ausführungsbeispiel sieht vor, dass das Kuppelelement eine Kupplungskugel ist und das Kuppelgegenelement eine Kupplungsaufnahme einer Zugkupplung eines Anhängers ist. Das als Kupplungskugel ausgestaltete Kuppelelement steht zweckmäßigerweise vor einen Kupplungsarm vor oder ist an einem freien Endbereich eines Kupplungsarmes angeordnet.

Es ist aber auch möglich, dass die Sensorvorrichtung an einer sogenannten Sattelkupplung angeordnet oder anordenbar ist, bei der das Kuppelelement eine Kupplungsaufnahme, zum Beispiel ein Kupplungsmaul zur Aufnahme eines Sattelzapfens des Kuppelgegenelementes, aufweist. Mithin ist also in diesem Fall die Aufnahme am Zugfahrzeug vorgesehen, während das in die Aufnahme eingreifende Bauteil am Anhängerfahrzeug vorhanden ist. Das Kuppelelement weist vorteilhaft eine Kupplungsaufnahme, insbesondere ein Kupplungsmaul, zur Aufnahme eines Sattelzapfens des Kuppelgegenelements auf.

Der Lagerkörper ist zweckmäßigerweise ringförmig oder weist Ringabschnitte auf. Der Lagerkörper kann beispielsweise am Außenumfang eines Kupplungsarmes angeordnet sein oder auch am Innenumfang einer Kupplungsaufnahme.

Weiterhin ist es möglich, dass der Lagerkörper eine Aussparung oder Durchtrittsöffnung für mindestens einen Kuppelelement-Träger der Zugfahrzeugkupplung, beispielsweise den Kupplungsarm, aufweist. Der Lagerkörper kann auch mehrteilig sein, d.h., dass er Lagerkörperabschnitte aufweist, um den Mitnehmer zu lagern. Mithin kann also der Mitnehmer an mehreren Lagerkörperteilen oder Lagerkörperabschnitten oder mehreren Lagerkörpern gelagert sein.

Ferner ist es möglich, dass der Lagerkörper eine Lagerwelle oder einen Lagerzapfen umfasst.

Der Mitnehmer weist vorzugsweise Mittel für einen reibschlüssigen und/oder kraftschlüssigen und/oder magnetisch anhaftenden Halt an dem Kuppelgegenelement auf.

Vorteilhaft ist vorgesehen, dass das Kuppelgegenelement relativ zum Kuppelelement um die Mitnahme-Drehachse um einen Schwenkwinkel von mindestens 140°, vorzugsweise 160° oder weiter bevorzugt mindestens 180° oder mindestens 220° schwenken kann.

Der mindestens eine Bewegungsfreiheitsgrad des Mitnehmers zur Bereitstellung oder Aufrechterhaltung der Mitnahmekopplung zu dem Kuppelgegenelement umfasst zweckmäßigerweise mindestens einen Drehfreiheitsgrad zur Drehung des Mitnehmers um mindestens eine zu der Mitnahme-Drehachse winkelige, beispielsweise rechtwinkelige, Drehachse oder wird dadurch gebildet. Bevorzugt ist es, wenn zwei Drehfreiheitsgrade vorhanden sind, die von dem Mitnahme-Drehfreiheitsgrad verschieden sind und als Bewegungsfreiheitsgrade zur Bereitstellung oder Aufrechterhaltung der Mitnahmekopplung des Mitnehmers zu dem Kuppelgegenelement dienen.

Beispielsweise kann der Mitnehmer kardanisch bezüglich des Kuppelelementes oder an dem Kuppelelement gelagert sein. Die Kardanachsen oder kardanischen Achsen sind jedoch von der Mitnahme-Drehachse verschieden. Beispielsweise ist der Mitnehmer an dem Lagerkörper drehbar um die Mitnahme-Drehachse gelagert, welcher seinerseits kardanisch bezüglich des Kuppelelements gelagert ist.

Weiterhin vorteilhaft ist es, wenn der Mitnehmer oder der Lagerkörper, der den Mitnehmer bezüglich der Mitnahme-Drehachse drehbar lagert, anhand mindestens eines Kugelgelenks bezüglich des Kuppelelements oder an dem Kuppelelement gelagert ist.

Das Kugelgelenk ist vorzugsweise bezüglich der Mitnahme-Drehachse an dem Kuppelelement oder bezüglich des Kuppelelements drehfest festgelegt. Es ist aber auch möglich, dass das Kugelgelenk bezüglich der Mitnahme-Drehachse und in Bezug auf das Kuppelelement nicht frei beweglich ist, sondern beispielsweise gebremst, zum Beispiel durch eine Reibbremse oder dergleichen.

Der Mitnehmer ist vorteilhaft bezüglich des Kuppelelements zur Bereitstellung oder Aufrechterhaltung der Mitnahmekopplung zu dem Kuppelgegenelement mit mindestens einem von der Drehbarkeit um die Mitnahme-Drehachse verschiedenen Drehfreiheitsgrad beweglich gelagert, der eine Auslenkung des Mitnehmers bezüglich des Kuppelelements von minimal 3° oder minimal 5° oder minimal 10° aus einer Mittellage des Mitnehmers bezüglich des Kuppelelements ermöglicht und/oder der eine Auslenkung des Mitnehmers bezüglich des Kuppelelements von maximal 30°, vorteilhaft maximal 20° oder maximal 10° aus einer Mittellage des Mitnehmers bezüglich des Kuppelelements ermöglicht. Der Mitnehmer kann aus der Mittellage bezüglich der von der Mitnahme-Drehachse verschiedenen Drehachse, die man auch als eine Schwenkachse bezeichnen kann, zu einander entgegengesetzten Seiten hin um jeweils maximal 30°, insbesondere maximal 20° oder maximal 10°, auslenkbar sein. Eine darüber hinausgehende stärkere Auslenkung des Mitnehmers aus der Mittellage ist vorteilhaft nicht nötig und/oder nicht vorgesehen.

Eine maximale Gesamt-Auslenkbarkeit des Mitnehmers um eine zu der Mitnahme-Drehachse winkeligen Drehachse/Schwenkachse beträgt beispielsweise maximal 60°, maximal 40° oder maximal 20°.

Bevorzugt ist der Mitnehmer bezüglich des Lagerkörpers, insbesondere bezüglich der Mitnahme-Drehachse, linear unverschieblich angeordnet, jedoch drehbar um die Mitnahme-Drehachse. Die lineare Unverschieblichkeit kann in Bezug auf eine oder mehrere Achsen, insbesondere eine oder mehrere Drehachsen vorgesehen sein.

Vorteilhaft kann vorgesehen sein, dass der Mitnehmer an dem Lagerkörper ausschließlich um die Mitnahme-Drehachse drehbar gelagert ist, jedoch ansonsten keinen Bewegungsfreiheitsgrad bezüglich des Lagerkörpers aufweist.

Vorteilhaft ist vorgesehen, dass der Mitnehmer an dem Lagerkörper ausschließlich drehbar gelagert ist.

Der Lagerkörper hingegen kann bezüglich des Kuppelelements linear verschieblich gelagert sein, insbesondere parallel zu der Mitnahme-Drehachse. Somit wird eine lineare Verschieblichkeit des Mitnehmers relativ zu dem Kuppelgegenelement durch die lineare Verschieblichkeit oder eine lineare Verschieblichkeit des Lagerkörpers relativ zum Kuppelelement bereitgestellt. Die lineare Verschieblichkeit des Mitnehmers parallel zu der Mitnahme-Drehachse ist vorzugsweise die einzige lineare Verschieblichkeit des Mitnehmers relativ zu dem Kuppelelement. Der Mitnehmer ist ansonsten nicht linear verschieblich, jedoch vorzugsweise um mindestens einen Drehfreiheitsgrad, der von einer Drehung um die Mitnahme-Drehachse verschieden ist, drehbar.

Vorteilhaft ist vorgesehen, dass der Mitnehmer außerhalb eines Lagerbereichs des Gelenks, in dem das Kuppelelement und das Kuppelgegenelement in lagerndem Eingriff miteinander sind, angeordnet ist.

Vorteilhaft ist ferner, wenn der mindestens eine Sensor in einem Innenraum des Mitnehmers angeordnet ist und/oder der Mitnehmer ein Schutzgehäuse für den mindestens einen Sensor bildet.

Ein Grundgedanke dabei ist es, das die Sensorvorrichtung im Außenraum, d.h. direkt an der Kupplungsaufnahme oder dem Kupplungsmaul angeordnet ist, wobei der Mitnehmer gleichzeitig den Sensor schützt. Der Sensor ist beispielsweise im Innenraum des Mitnehmers angeordnet oder in einem Schutzgehäuse, welches durch den Mitnehmer gebildet ist.

Weiterhin ist der Mitnehmer nicht direkt im Lagerbereich von Kuppelelement und Kuppelgegenelement angeordnet, sodass eine Nachrüstung einer vorhandenen Zugfahrzeugkupplung leichter ist. Der Lagerbereich ist im Kraftfluss zwischen Zugfahrzeug und Anhängerfahrzeug und mechanisch stark belastet und wird durch den Mitnehmer nicht geschwächt. Ein Aufnahmeraum oder Bauraum für den Mitnehmer ist nicht notwendig.

Ein bevorzugtes Konzept sieht dabei vor, dass der Sensor sozusagen vollständig gekapselt oder geschützt in dem Schutzgehäuse bzw. dem Mitnehmer angeordnet ist.

Der Mitnehmer ist vorteilhaft in der Art einer Schutzkappe oder Schutzabdeckung ausgestaltet. Der Mitnehmer kann beispielsweise eine Art Abdeckhaube oder Abdeckkappe bilden, in deren Innenraum der mindestens eine Sensor, vorzugsweise eine Sensorvorrichtung, angeordnet ist.

Es ist vorteilhaft, dass am Sattelzapfen oder jedenfalls der Kupplung des Sattelaufliegers keine besonderen Maßnahmen notwendig sind. Vielmehr ist der Mitnehmer der erfindungsgemäßen Sensorvorrichtung zur Drehmitnahme oder Drehkoppelung mit dem Sattelzapfen ausgestaltet und vorgesehen. Der Lagerkörper ist beispielsweise an dem Kuppelelement des Zugfahrzeugs angeordnet oder anordenbar. Der Lagerkörper kann aber auch am Kuppelelement angeordnet sein oder durch einen Abschnitt des Kuppelelements gebildet sein. So kann beispielsweise an dem Kuppelelement der Zugfahrzeugkupplung oder Sattelkupplung eine Lagernut oder ein Lagervorsprung angeordnet sein, an welchem der Mitnehmer gelagert ist.

Besonders bevorzugt ist jedoch eine Ausführungsform, bei der der Lagerkörper als ein von dem Kuppelelement separater Körper ausgestaltet ist.

Eine bevorzugte Ausführungsform sieht vor, dass die Sensorvorrichtung zu einer Anordnung in einem bei der Kupplungsaufnahme, beispielsweise dem Kupplungsmaul, vorhandenen Aufnahmeraum der Zugfahrzeugkupplung ausgestaltet und/oder vorgesehen ist. Vorteilhaft ist eine geometrische Ausgestaltung der Sensorvorrichtung derart, dass sie in dem Aufnahmeraum angeordnet sein kann. Der Aufnahmeraum befindet sich beispielsweise unterhalb der Kupplungsaufnahme oder neben einer Stützplatte der Zugfahrzeugkupplung. Der Aufnahmeraum kann beispielsweise als eine Kavität, Aussparung oder dergleichen ausgestaltet sein. Bevorzugt ist es, wenn der Aufnahmeraum sozusagen ohnehin vorhanden ist, d.h., dass eine an sich vorhandene Zugfahrzeugkupplung mit der Sensorvorrichtung nachgerüstet werden kann.

Weiterhin zweckmäßig ist eine Halteeinrichtung zum Halten des Mitnehmers an einer Stirnseite des Kuppelgegenelements, insbesondere des Sattelzapfens. Die Halteeinrichtung oder eine Halteeinrichtung kann aber auch zur Befestigung an einander entgegengesetzten Seiten der Kupplungsaufnahme vorgesehen sein. Beispielsweise wird die Kupplungsaufnahme von seitlichen Abschnitten des Kuppelelementes begrenzt. An diesen seitlichen Abschnitten kann die Halteeinrichtung fest angeordnet sein oder beweglich gelagert sein. So können beispielsweise Schrauben oder dergleichen andere Befestigungsmittel dafür vorgesehen sein, die Halteeinrichtung an dem Kuppelelement zu befestigen.

Es ist möglich, dass die Halteeinrichtung einen Haltekörper, insbesondere eine Halteplatte, aufweist, der sich unterhalb des Aufnahmeraumes oder der Kupplungsaufnahme erstreckt und diese sozusagen von unten her zumindest teilweise in der Art eines Deckels verschließt.

Die Sensorvorrichtung umfasst zweckmäßigerweise eine Halteeinrichtung zu einem bezüglich der Mitnahme-Drehachse drehfesten Halten des Lagerkörpers an dem Kuppelelement. Der Lagerkörper selbst ist also bezüglich des Kuppelelementes durch die Halteeinrichtung drehfest gehalten. Am Lagerkörper wiederum ist der Mitnehmer um die Mitnahme-Drehachse beweglich gelagert.

Die Sensorvorrichtung ist zweckmäßigerweise anhand eines Befestigungsmittels an der Zugfahrzeugkupplung befestigbar. Das Befestigungsmittel umfasst beispielsweise ein Schraubmittel, ein Klemmmittel, eine Formschlusskontur oder dergleichen. Auch eine Verklebung und/oder Verschweißung als Befestigungsmittel zur Befestigung der Sensorvorrichtung an der Zugfahrzeugkupplung ist ohne weiteres vorteilhaft. Kleben und Schweißen haben den Vorteil, dass die Struktur der Zugfahrzeugkupplung unverändert bleibt, Beispielweise keine Löcher oder dergleichen notwendig sind. Zur Herstellung einer Schweißverbindung zwischen der Sensorvorrichtung und der Zugfahrzeugkupplung eignet sich beispielsweise ein Kondensatorentladungsschweißen. Ferner kann die Sensorvorrichtung mit der Zugkugelkupplung anhand mindestens einer Niet verbunden sein. Weiterhin können sogenannte Schweißbolzen, jedenfalls mindestens ein Schweißbolzen, eingesetzt werden, d. h. Bolzen, mit denen eine Komponente davon mit der Zugfahrzeugkupplung verschweißt ist.

Schließlich eignet sich als ein Befestigungsmittel auch ein Saugmittel, beispielsweise ein Saugkopf. Ein Saugkopf kann z.B. an der Halteeinrichtung angeordnet sein und zum Ansaugen der Halteeinrichtung an einen Kupplungsarm oder eine Fläche neben einer Kupplungsaufnahme der Zugfahrzeugkupplung ausgestaltet und/oder vorgesehen sein.

Die Halteeinrichtung umfasst zweckmäßigerweise das oben genannte oder ein Befestigungsmittel, zum Beispiel ein Schraubmittel, Klemmmittel, eine Formschlusskontur oder dergleichen, zur Befestigung an dem Kuppelelement oder bei dem Kuppelelement der Zugfahrzeugkupplung. Als ein Schraubmittel sind beispielsweise eine oder mehrere Schrauben vorgesehen. Eine Verklemmung mittels beispielsweise Klemmkonturen, einem Klemmvorsprung oder dergleichen ist ebenfalls vorteilhaft, um die Halteeinrichtung an dem Kuppelelement oder neben dem Kuppelelement der Zugfahrzeugkupplung zu befestigen. Als Befestigungsmittel kann aber auch eine Verklebung dienen. Als Formschlusskontur eignet sich beispielsweise ein Stützvorsprung, eine Hakenkontur oder dergleichen, mit der die Halteeinrichtung formschlüssig an der Zugfahrzeugkupplung zu befestigen ist.

Die Halteeinrichtung kann dazu dienen, den Lagerkörper mit mindestens einem zur Bereitstellung oder Aufrechterhaltung der Mitnahmekopplung des Mitnehmers zu dem Kuppelgegenelement geeigneten Bewegungsfreiheitsgrad, der sich von der Drehbarkeit um die Mitnahme-Drehachse unterscheidet, bezüglich des Kuppelelementes zu lagern. Beispielsweise ist die Halteeinrichtung kardanisch bezüglich des Kuppelelementes gelagert.

Die Halteeinrichtung kann beispielsweise eine Lagereinrichtung für den Lagerkörper bilden, an dem der Mitnehmer um die Mitnahme-Drehachse drehbar gelagert ist.

Die Halteeinrichtung weist beispielsweise einen Träger, insbesondere eine Tragplatte, für den Lagerkörper auf.

Es ist möglich, dass der Träger anhand der erwähnten Befestigungsmittel und/oder einer Befestigungseinrichtung lösbar mit dem Kuppelelement oder einer das Kuppelelement tragenden Komponente der Zugfahrzeugkupplung verbunden ist. Die Befestigungseinrichtung umfasst beispielsweise eine Schraubanordnung mit einer oder mehreren Schrauben und/oder eine Rastanordnung und/oder eine Klemmanordnung oder dergleichen

Der Träger kann bezüglich des Kuppelelements feststehend oder ortsfest sein.

Der Träger ist zweckmäßigerweise an dem Kuppelelement oder bezüglich des Kuppelelements beweglich gelagert.

Insbesondere in diesem Fall ist es möglich, dass der Lagerkörper selbst fest mit dem Träger verbunden ist, d.h., dass die Beweglichkeit des Lagerkörpers um einen oder mehrere Bewegungsfreiheitsgrade, die von der Drehbarkeit um die Mitnahme-Drehachse verschieden sind, ausschließlich oder im Wesentlichen durch die Halteeinrichtung bereitgestellt wird.

Weiterhin ist es aber auch möglich, dass der Lagerkörper an dem Träger mit mindestens einem von der Drehbarkeit um die Mitnahme-Drehachse verschiedenen Bewegungsfreiheitsgrad beweglich gelagert ist. Der Träger kann also in diesem Fall sogar fest mit dem Kuppelelement der Zugfahrzeugkupplung oder an dem Kuppelelement der Zugfahrzeugkupplung verbunden sein, während die Beweglichkeit des Mitnehmers abgesehen von der Mitnahme-Drehachse durch eine bewegliche Lagerung des Lagerkörpers an dem Träger der Halteeinrichtung bereitgestellt wird.

Bevorzugt ist es, wenn der Lagerkörper bezüglich des Kuppelelementes der Zugfahrzeugkupplung mit Ausnahme einer Drehbarkeit um die Mitnahme-Drehachse schwimmend und/oder mit mindestens zwei Bewegungsfreiheitsgraden beweglich gelagert ist. So kann beispielsweise der Lagerkörper um zwei voneinander verschiedene Schwenkachsen bezüglich des Kuppelelementes beweglich gelagert sein, die sich von der Mitnahme-Drehachse unterscheiden, insbesondere zu dieser winkelig sind.

An dem Lagerkörper ist der Mitnehmer vorteilhaft an mindestens zwei Drehlagern, beispielsweise Wälzlagern, insbesondere Rollenlagern, Kugellagern oder dergleichen, zwischen denen bezüglich der Mitnahme-Drehachse ein Abstand vorhanden ist, drehbar gelagert. In dem Abstand kann beispielsweise der mindestens eine Sensor oder eine Sensorvorrichtung angeordnet sein. Das Lagerkonzept mit beabstandeten Drehlagern ermöglicht eine optimale Abstützung des Mitnehmers an dem Lagerkörper. Eine Verkantung oder sonstige ungünstige Lage des Mitnehmers relativ zu dem Lagerkörper kann durch die beiden zu einander beabstandeten Drehlager vermieden oder verringert werden. Dadurch läuft der Mitnehmer relativ zum Lagerkörper besonders leicht.

Weiterhin ist es vorteilhaft, dass der Mitnehmer an einander entgegengesetzten Längsendbereichen des Lagerkörpers bezüglich der Mitnahme-Drehachse drehbar gelagert ist. Beispielsweise ist der Mitnehmer an einem freien Längsendbereich sowie an einem Fußbereich des Lagerkörpers, mit dem dieser an einem weiteren Körper, insbesondere der vorgenannten Halteeinrichtung oder Halteeinrichtung verbunden ist, gelagert.

Auch wenn nur ein einziges Drehlager, aber auch wenn zwei oder weitere Drehlager zwischen Lagerkörper und Mitnehmer vorhanden ist oder sind, ist es vorteilhaft, wenn das oder alle Drehlager zwischen Lagerkörper und Mitnehmer als Wälzlager, insbesondere Rollenlager, Kugellager, Nadellager oder dergleichen, ausgestaltet ist oder sind. Dadurch dreht der Mitnehmer bezüglich des Lagerkörpers besonders leicht, so dass die Mitnahme durch das Kuppelgegenelement einfacher realisierbar ist.

Der Mitnehmer weist zweckmäßigerweise eine von der Mitnahme-Drehachse durchsetzte Stirnfläche auf, die zur Mitnahme durch das Kuppelgegenelement ausgestaltet und/oder vorgesehen ist. Die Stirnfläche ist beispielsweise eine Reibschlussfläche, eine Fläche mit Formschlusskonturen oder dergleichen. Mithin dient die Stirnfläche zur reibschlüssigen oder formschlüssigen Mitnahme durch das Kuppelgegenelement. Die Stirnfläche eignet sich aber auch dann zu einer optimalen Mitnahme, wenn eine Magnethaftung gegeben ist und/oder wenn der Mitnehmer durch eine Federanordnung in Richtung eines Mitnahmekontakts mit dem Kuppelgegenelement belastet ist, was später noch deutlicher wird.

Die Stirnfläche ist zweckmäßigerweise als eine Planfläche ausgestaltet oder weist eine Planfläche auf. Die Stirnfläche und eine Mitnahmefläche an einer Stirnseite des Kuppelgegenelements liegen in der Mitnahmestellung vorteilhaft aneinander an, insbesondere flächig aneinander an.

Die Stirnfläche des Mitnehmers ist vorteilhaft in der Mitnahmestellung zur Anlage an der oder einer Mitnahmefläche, die an einer dem Mitnehmer gegenüberliegenden Stirnseite des Kuppelgegenelements vorgesehen, und ist ausschließlich mit solchen Flächenabschnitten in Kontakt mit der Mitnahmefläche, deren Normalenrichtung parallel zur Mitnahme-Drehachse ist. Beispielsweise sind die Stirnfläche des Mitnehmers und die Stirnseite des Kuppelgegenelements jeweils Planflächen, die dementsprechend nur in ihrer jeweiligen Normalenrichtung aneinander anliegen. Es ist aber auch möglich, dass die Stirnfläche des Mitnehmers oder die Mitnahmekontur des Kuppelgegenelements eine Wellenkontur oder Rillenkontur aufweist. Die jeweiligen Scheitelpunkte der Wellen oder Rillen sind in Mitnahmekontakt mit der Mitnahmefläche des Kuppelgegenelements.

Vorteilhaft ist vorgesehen, dass der Mitnehmer eine von der Mitnahme-Drehachse durchsetzte Stirnfläche aufweist, die zur ausschließlich reibschlüssigen und/oder magnetischen, Mitnahme durch eine Mitnahmefläche an einer Stirnseite des Kuppelgegenelements ausgestaltet und/oder vorgesehen ist.

Eine von der Mitnahmedrehachse durchsetzte Stirnseite des Mitnehmers weist zweckmäßigerweise mindestens einen Ring auf oder wird durch einen Ring gebildet. Es versteht sich, dass an der Stirnseite einerseits eine Stirnfläche, andererseits zudem noch ein Ring vorhanden sein kann, der beispielsweise an einem Außenumfang des Kuppelgegenelementes angreift oder mit seiner Stirnseite an einem Außenumfang des Kuppelgegenelementes in Kontakt treten kann. Der Ring kann sozusagen als Ringvorsprung vor eine Stirnfläche ausgestaltet sein, die ebenfalls zur reibschlüssigen, formschlüssigen oder sonstigen Mitnahmekopplung mit dem Kuppelgegenelement vorgesehen ist.

Der Mitnehmer weist vorteilhaft mindestens eine Schrägfläche, insbesondere eine Einführschräge, eine konische Fläche oder dergleichen, auf, an der das Kuppelgegenelement beim Ankuppeln an die Zugfahrzeugkupplung entlanggleiten kann. Eine derartige Schrägfläche kann beispielsweise als eine konische Schrägfläche zwischen einerseits der vorgenannten Stirnfläche oder Planfläche und andererseits einem Außenumfang des Mitnehmers ausgestaltet oder vorgesehen sein.

Bevorzugt weist die Sensorvorrichtung ein Kraftbeaufschlagungsmittel oder mehrere Kraftbeaufschlagungsmittel zu einer Kraftbeaufschlagung des Mitnehmers in Richtung des Kuppelgegenelementes auf. Mithin wird also der Mitnehmer zum Kuppelgegenelement hin kraftbeaufschlagt, was die Mitnahmekopplung erleichtert oder verbessert.

Bevorzugt hat die Sensorvorrichtung eine Federanordnung zur Bereitstellung einer den Mitnehmer in Richtung des Kuppelgegenelementes beaufschlagenden Federkraft. Die Federanordnung kann eine oder mehrere Federn, insbesondere metallische Federn, Schraubenfedern, Spiralfedern oder dergleichen umfassen.

Die Federkraft kann aber auch ganz oder teilweise durch eine gewisse Elastizität eines Mitnehmerkörpers des Mitnehmers bereitgestellt oder unterstützt werden. Eine Kombination von dem Mitnehmer separaten Federn, insbesondere metallischen Federn, Federpuffern oder dergleichen, mit einem elastischen oder federelastischen Mitnehmerkörper des Mitnehmers ist ohne weiteres möglich.

An dieser Stelle sei erwähnt, dass der Mitnehmer vorteilhaft mindestens einen elastischen Abschnitt zur elastischen Verformung durch das Kuppelgegenelement aufweist. Mithin kann also beispielsweise die Kraftbeaufschlagung durch eine Feder, einen Magnet oder dergleichen in Richtung des Kuppelgegenelementes erfolgen. Der elastische Abschnitt gibt dann nach. Der Mitnehmer ist also durch das Kuppelgegenelement vorteilhaft elastisch verformbar oder zumindest partiell elastisch verformbar.

Weiterhin ist es vorteilhaft, wenn die Sensorvorrichtung eine Magnetanordnung zur Bereitstellung einer den Mitnehmer in Richtung des Kuppelgegenelementes beaufschlagenden magnetischen Anziehungskraft aufweist. Die Magnetanordnung kann einen oder mehrere Magnete umfassen, die beispielsweise mit dem an sich ferromagnetischen Kuppelgegenelement zusammenwirken.

Die Magnetanordnung kann Permanentmagneten und/oder elektromagnetisch wirkende Magneten umfassen. Beispielsweise umfasst die Magnetanordnung eine oder mehrere elektrische Spulen.

Die Magnetanordnung kann eines oder mehrere Flussleitelemente zur Lenkung des magnetischen Flusses, den ein Permanentmagnet oder Elektromagnet der Magnetanordnung erzeugt, aufweisen. Beispielsweise ist ein derartiges Flussleitelement, insbesondere ein weichmagnetisches Flussleitelement, dazu ausgestaltet und vorgesehen, den magnetischen Fluss in Richtung des Kuppelgegenelementes zu lenken oder leiten. Das Flussleitelement ist beispielsweise dazu geeignet, eine Anziehungskraft des Mitnehmers in Richtung des Kuppelgegenelements zu verstärken oder auszurichten.

Die Magnetanordnung kann zur Betätigung und Erregung des mindestens einen Sensors ausgestaltet oder angeordnet sein. Mithin wird also die Magnetanordnung sozusagen doppelt genutzt, nämlich zum einen für die Erzeugung der Anziehungskraft in Richtung des Kuppelgegenelementes, zum andern aber auch zur Erregung oder Betätigung des mindestens einen Sensors.

Weiterhin ist es aber auch möglich, dass die Magnetanordnung eine Abschirmungseinrichtung zur Abschirmung des mindestens einen Sensors gegenüber magnetischen Einflüssen der Magnetanordnung aufweist. Somit kann beispielsweise das Magnetfeld der Magnetanordnung vom Sensor weg oder um den Sensor herum gelenkt werden. An dieser Stelle ist aber zu erwähnen, dass auch eine Kombination von magnetischer Abschirmung und magnetischer Betätigung des Sensors möglich ist. So kann beispielsweise eine Leitung des magnetischen Flusses oder des Magnetfelds der Magnetanordnung um einen Teilbereich des Sensors herum erfolgen, um eine Fehlbetätigung zu vermeiden, wobei dennoch das Magnetfeld in Richtung des Sensors gerichtet ist, jedoch an eine andere Stelle.

An dem Mitnehmer ist zweckmäßigerweise mindestens eine Reibschlussfläche für einen reibschlüssigen Kontakt mit dem Kuppelgegenelement und/oder mindestens eine Formschlusskontur für einen formschlüssigen Eingriff des Kuppelgegenelementes und des Mitnehmers ineinander vorgesehen oder angeordnet. Die Reibschlussfläche kann beispielsweise eine Gummifläche oder dergleichen umfassen.

Vorteilhaft ist vorgesehen, dass der Mitnehmer ausschließlich zur reibschlüssigen Drehmitnahme durch das Kuppelgegenelement oder zum reibschlüssigen Kontakt mit dem Kuppelgegenelement ausgestaltet ist. Insbesondere weist der Mitnehmer vorzugsweise ausschließlich eine Reibschlussfläche, zum Beispiel eine Stirnfläche, zum reibschlüssigen Kontakt mit dem Kuppelgegenelement auf. Der Mitnehmer weist vorteilhaft keine Formschlusskontur zur formschlüssigen Drehmitnahme durch das Kuppelgegenelement auf.

Der Mitnehmer kann einen Mitnahmering oder ringförmigen Abschnitt aufweisen. Mehrere Teilringe, die miteinander gekoppelt oder verbunden sind, können bei dem Mitnehmer auch vorhanden sein. Vorteilhaft ist weiterhin eine ringförmige oder teilringförmige Umfangsmitnahmekontur bei dem Mitnehmer.

Der Mitnehmer weist zweckmäßigerweise einen domartigen oder turmartigen Mitnahmekörper auf. Der Mitnahmekörper kann beispielsweise in der Art einer Haube oder einer Abdeckung ausgestaltet sein.

Der Mitnehmer bildet zweckmäßigerweise ein Schutzgehäuse oder eine Abdeckung für den mindestens einen Sensor.

Vorteilhaft ist es auch, wenn der Mitnehmer ein Schutzgehäuse für einen den Mitnehmer lagernden Lagerkörper, beispielsweise eine Lagerwelle oder dergleichen, bildet oder aufweist.

Der mindestens eine Sensor und/oder ein den Mitnehmer um die Mitnahme-Drehachse lagernder Lagerkörper, beispielsweise eine Lagerwelle, ist vorzugsweise in einem Innenraum des Mitnehmers angeordnet, insbesondere vollständig angeordnet. Aber auch eine teilweise Anordnung des mindestens einen Sensors oder des Lagerkörpers im Innenraum des Mitnehmers ist möglich. So kann der Mitnehmer beispielsweise einen Endbereich des Lagerkörpers, insbesondere einer Lagerwelle, überdecken. Der mindestens eine Sensor und/oder der Lagerkörper sind beispielsweise unterhalb einer Stirnwand oder Deckenwand und in einem durch eine Umfangswand des Mitnehmers begrenzten Innenraum angeordnet.

Die Sensorvorrichtung umfasst zweckmäßigerweise mindestens einen um die Mitnahme-Drehachse drehbar gelagerten Sensor oder Sensorgeber, insbesondere einen Ring, der eine Anordnung mehrerer Sensoren oder Sensorgeber umfasst. Der drehbar gelagerte Sensor oder Sensorgeber ist mit dem Mitnehmer drehgekoppelt oder drehverbunden. Wenn also der Mitnehmer um die Mitnahme-Drehachse dreht, nimmt er den mindestens einen Sensor oder Sensorgeber mit.

Weiterhin vorteilhaft ist es, wenn die Sensorvorrichtung eine Ringanordnung mehrerer um die Mitnahme-Drehachse angeordneter Sensoren oder Sensorgeber aufweist. Ein "Gegenstück" zum jeweiligen Sensor oder Sensorgeber, also für den Sensor ein Sensorgeber und für den Sensorgeber ein Sensor, ist zweckmäßigerweise bezüglich der Mitnahme-Drehachse ortsfest angeordnet. Durch die Ringanordnung mehrerer, insbesondere um die Mitnahme-Drehachse drehbarer, Sensoren oder Sensorgeber ist eine optimale Auflösung eines Winkelsignals möglich, welches die Sensorvorrichtung bei einer Drehung des Mitnehmers um die Mitnahme-Drehachse erzeugt, möglich.

Bei der Gelenk-Drehachse, die mit der Mitnahme-Drehachse korrespondiert, handelt es sich zweckmäßigerweise um eine Hochachse und/oder eine im Wesentlichen vertikal verlaufende Drehachse.

Es ist möglich, dass die Gelenk-Drehachse und die Mitnahme-Drehachse koaxial sind und/oder miteinander fluchten, wenn das Kuppelelement und das Kuppelgegenelement aneinander gekuppelt sind.

Es ist aber auch ein Querabstand zwischen diesen beiden Drehachsen möglich. Zumindest vorteilhaft ist es, wenn die Gelenk-Drehachse und die Mitnahme-Drehachse parallel zueinander verlaufen, wenn das Kuppelelement und das Kuppelgegenelement aneinander gekuppelt sind.

Ein Vorteil der Erfindung ist es, wenn oder dass die Sensorvorrichtung am Zugfahrzeug angeordnet ist, während das Anhängerfahrzeug sozusagen die passive, jedoch die Sensorvorrichtung betätigende Einrichtung bildet. Das Anhängerfahrzeug braucht nicht modifiziert zu werden.

Die Sensorvorrichtung kann zur Nachrüstung von Zugfahrzeugen vorgesehen sein, d. h. dass die Zugfahrzeugkupplung erst nachträglich mit der Sensorvorrichtung auszustatten ist, z.B. durch Ankleben, Anschweißen, Anklemmen oder dergleichen.

Weiterhin ist es möglich, dass die Zugfahrzeugkupplung und/oder die Kupplung des Anhängerfahrzeugs, die das Kuppelgegenelement aufweist, mechanisch nicht verändert wird oder zu verändern ist. Insbesondere bleiben im Kraftfluss oder zur Kraftübertragung zwischen Zugfahrzeug und Anhängefahrzeug vorgesehene Komponenten der Zugfahrzeugkupplung und der Kupplung des Anhängerfahrzeugs unverändert, beispielsweise die Bereiche des Kuppelelements und des Kuppelgegenelements, die ineinander eingreifen und das Gelenk bilden, und/oder eine Verriegelungseinrichtung der Zugfahrzeugkupplung oder der Kupplung des Anhängerfahrzeugs oder dergleichen.

Vorteilhaft ist vorgesehen, dass eine Verriegelungstechnik oder Verriegelungseinrichtung der Zugfahrzeugkupplung oder der Kupplung des Anhängerfahrzeugs nicht modifiziert werden muss.

Nachfolgend werden Ausführungsbeispiele der Erfindung anhand der Zeichnung erläutert. Es zeigen:

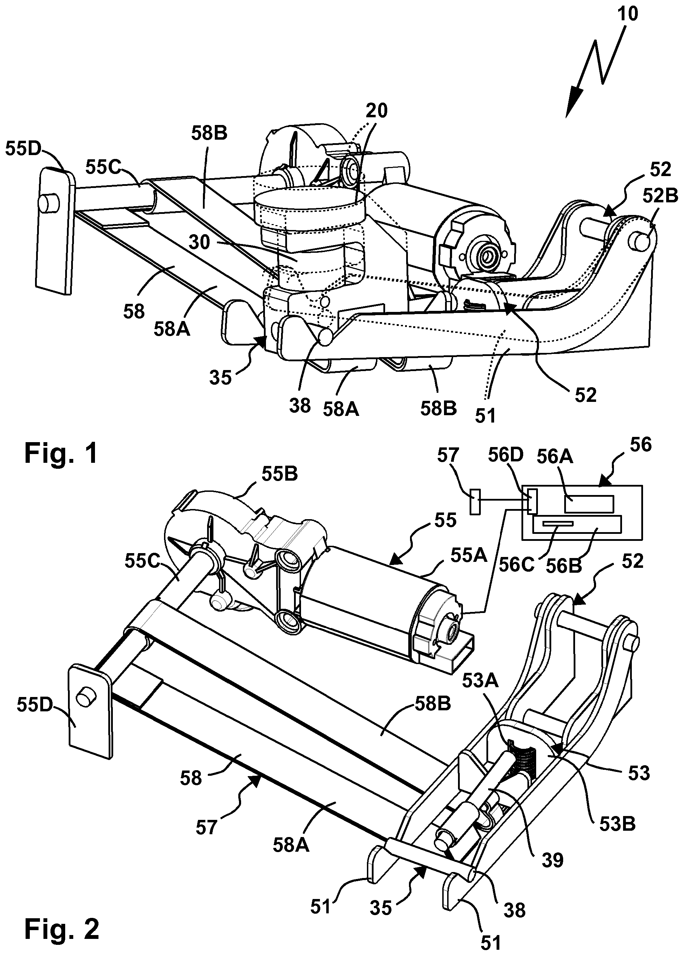

- Figur 1: eine perspektivische Seitenansicht einer Sensorvorrichtung mit Stellantrieb,
- Figur 2: die Anordnung gemäß Figur 1 von schräg oben,

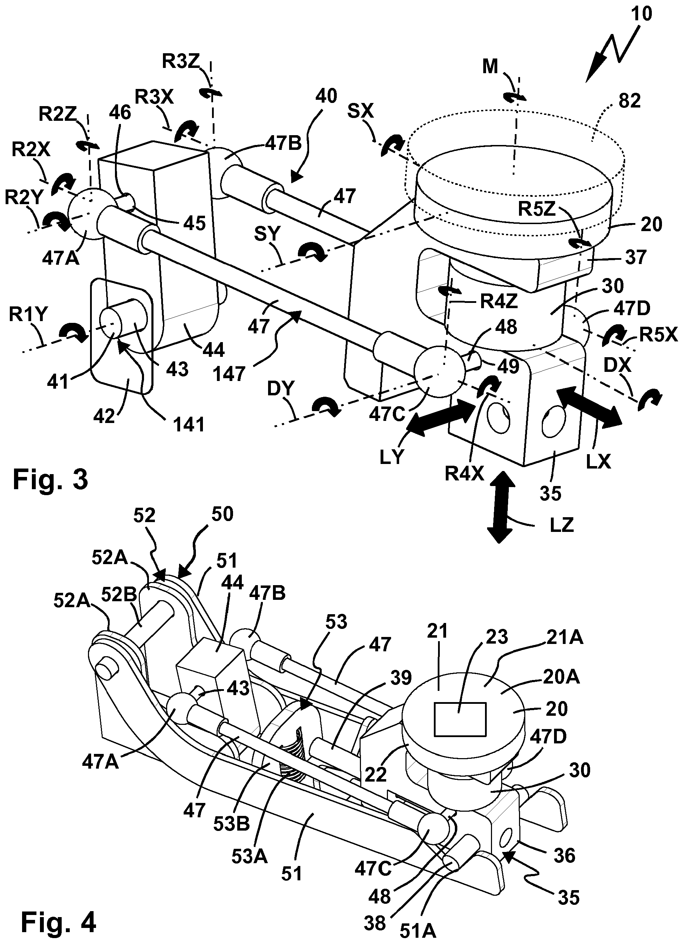

- Figur 3: die Sensorvorrichtung mit ihrer Halteeinrichtung,
- Figur 4: die Sensorvorrichtung gemäß Figur 3 mit Stellkörpern des Stellantriebs gemäß Figuren 1, 2,

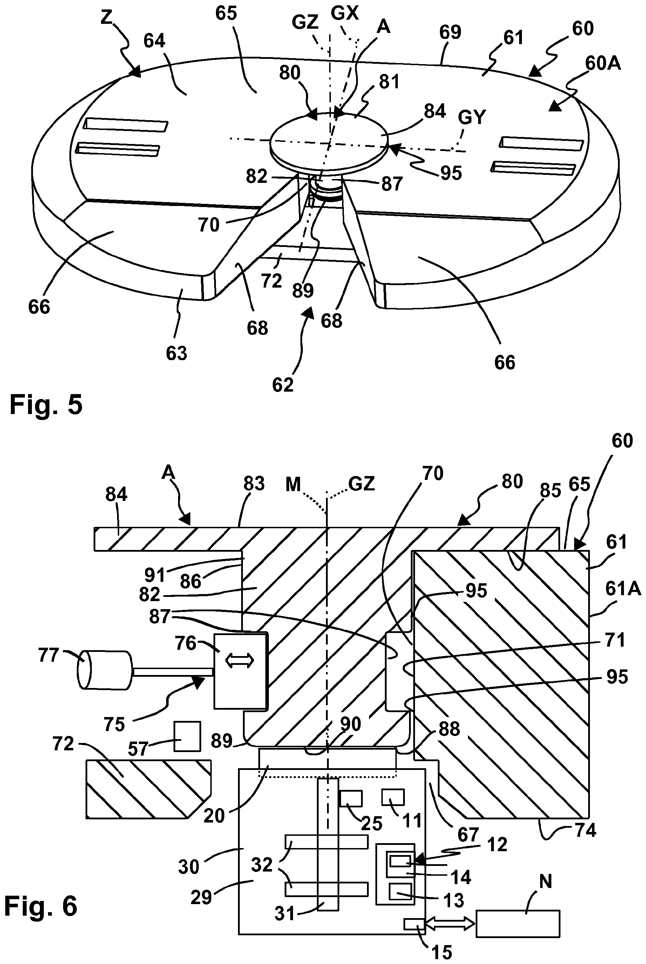

- Figur 5: eine perspektivische Schrägansicht auf die Zugfahrzeugkupplung gemäß Figur 1 von schräg oben, wobei die Anhänger-Kupplung mit der Zugfahrzeugkupplung gekuppelt ist,
- Figur 6: eine Schnittdarstellung durch einen Mitnehmer der in Figur 5 dargestellten Sensorvorrichtung, etwa entlang einer Schnittlinie entlang einer Achse GX,

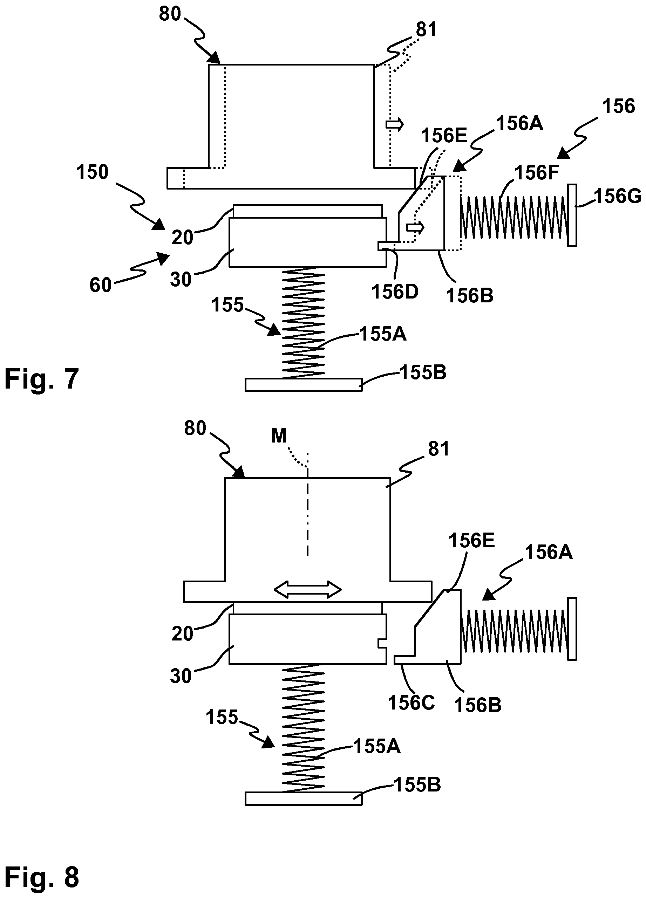

- Figur 7: eine schematische Ansicht einer Sensorvorrichtung mit einem Stellantrieb mit einer Steuerungseinrichtung in Gestalt einer Rasteinrichtung in Freigabestellung,
- Figur 8: die Anordnung gemäß Figur 7 in Mitnahmestellung

Bei den nachfolgend erläuterten Ausführungsbeispielen sind Komponenten teilweise ähnlich oder in ihrer Funktionalität gleich. Insoweit werden Bezugsziffern verwendet, die um 100 verschieden sind oder teilweise auch identisch sind.

Eine Zugfahrzeugkupplung 60 ist als eine Sattelkupplung 60A ausgestaltet. Die Sattelkupplung 60A weist ein Kuppelelement 61 in Gestalt einer sogenannten Montageplatte 61A auf. An der Montageplatte 61A und mithin am Kuppelelement 61 ist eine Einführungsaufnahme 62 vorgesehen, die man auch als Einführungsöffnung bezeichnen kann. Die Einführungsaufnahme 62 erleichtert das Einführen eines Kuppelgegenelementes 81 einer Anhänger-Kupplung 80, die einen sogenannten Zapfen 82 oder Sattelzapfen 82 aufweist. Der Zapfen 82 dient zur Kupplung der Anhänger-Kupplung 80 mit der Zugfahrzeugkupplung 60.

Die Zugfahrzeugkupplung 60 ist an einem Zugfahrzeug Z angeordnet oder anordenbar. Bei dem Zugfahrzeug Z handelt es sich beispielsweise um einen sogenannten Sattelschlepper oder einen sonstigen Lastkraftwagen.

Die Anhängerkupplung 80 hingegen ist an einem Anhänger A befestigt oder befestigbar, beispielsweise einem sogenannten Sattelauflieger.

Zum Ankuppeln der Anhängerkupplung 80 an die Zugfahrzeugkupplung 60 wird der Sattelzapfen oder Zapfen 82 beispielsweise von einer Rückseite des Zugfahrzeugs Z oder von einer Stirnseite 63 des Kuppelelementes 61 her zum Kuppelelement 61 herangeführt, wobei in der Praxis das Zugfahrzeug Z rückwärtsfährt, um den Sattelauflieger und mithin das Anhängerfahrzeug A anzukuppeln.

Das Anhängerfahrzeug A ist an einer Oberseite 83 der Anhänger-Kupplung 80 oder des Zapfens 82 abgestützt. Die Oberseite 83 ist beispielsweise mit einer Unterseite des Anhängerfahrzeugs A verbunden, beispielsweise verschweißt oder verschraubt.

Die Oberseite 83 ist an einem Flanschkörper 84 vorgesehen, dessen von der Oberseite 83 abgewandte Unterseite eine Stützfläche 85 zur Abstützung an der Zugfahrzeugkupplung 60 bildet. Die Stützfläche 85 dient zur Auflage auf einer Auflagefläche 65 an der Oberseite 64 der Montageplatte 61A oder dem Kuppelelement 61. Die Auflagefläche 65 und die Stützfläche 85 sind vorzugsweise Planflächen. Mithin ist also die Anhängerkupplung 80 an der Auflagefläche 65 in einer horizontalen Ebene großflächig abgestützt, so dass wesentliche Stützkräfte nicht auf den eigentlichen Sattelzapfen 82 wirken, der nämlich mit einem Zapfenabschnitt 91 in eine Kupplungsaufnahme 70 der Zugfahrzeugkupplung 60 eingreift.

An der Stirnseite 63 ist eine Aufgleitschräge 66 angeordnet, an der die Stützfläche 85 beim Ankuppeln der Anhängerkupplung 80 an die Zugfahrzeugkupplung 60 entlanggleiten kann. Das Einführen des Sattelzapfens 82 in die Kupplungsaufnahme 70 wird durch Einführschrägen 68, die die Einführungsaufnahme 62 seitlich begrenzen und zu der Kupplungsaufnahme 70 hin aufeinander zu im Sinne einer Verengung verlaufen, erleichtert. Die Einführschrägen 68 erstrecken sich von der Stirnseite 63 in Richtung einer Vorderseite 69 des Kuppelelementes 61 oder der Montageplatte 61A.

Die Kupplungsaufnahme 70 weist eine im Wesentlichen zylindrische Innenkontur 71 auf, wobei diese Innenkontur 71 nicht vollständig zylindrisch sein muss, sondern lediglich eine sozusagen umhüllende Innenkontur darstellt. Mithin ist der Zapfenabschnitt 91 mit seiner ebenfalls im Wesentlichen zylindrischen Außenumfangskontur 86 am Innenumfang der Kupplungsaufnahme 70 zumindest partiell abgestützt, so dass sich der Sattelzapfen 82 im Wesentlichen um eine Gelenk-Drehachse GZ relativ zu der Zugfahrzeugkupplung 60 drehen kann.

An einer Unterseite 74 des Kuppelelementes 61 oder der Montageplatte 61A ist ein Stützkörper 72 angeordnet. Der Stützkörper 72 ist neben und/oder unterhalb der Kupplungsaufnahme 70 vorgesehen. Der Stützkörper 72 kann plattenartig sein. Der Sattelzapfen 82 ist an dem Stützkörper 72 vorbei in die Kupplungsaufnahme 70 einzuführen, wenn die Anhänger-Kupplung 80 an die Zugfahrzeugkupplung 60 angekuppelt wird.

Die Anhänger-Kupplung 80 ist an der Zugfahrzeugkupplung 60 durch eine Verriegelungseinrichtung 75 der Zugfahrzeugkupplung 60 verriegelbar. Die Verriegelungseinrichtung 75 umfasst einen Verriegelungskörper 76, der in eine Verriegelungsaufnahme 87 des Zapfens 82 eingreift, die an dessen Außenumfang 86 vorgesehen ist.

Der Zapfen 82 kann in die Kupplungsaufnahme 70 leicht eingebracht werden, indem nämlich beispielsweise eine an seiner Stirnseite 88, also an der dem Flanschkörper 84 entgegengesetzten Seite des Zapfens 82, eine Aufgleitschräge 89 vorhanden ist. Die Aufgleitschräge 89 wird beispielsweise durch einen gerundeten oder konischen Randabschnitt zwischen dem Außenumfang 86 und der Stirnseite 88 oder Stirnfläche des Zapfens 82 bereitgestellt.

Der Verriegelungskörper 76 ist zweckmäßigerweise durch einen manuellen oder motorischen Verriegelungsantrieb 77 antreibbar, so dass er in seiner Verriegelungsstellung in die Verriegelungsaufnahme 87 eingreift und in seiner Lösestellung aus der Verriegelungsaufnahme 87 heraus bewegt ist, so dass der Zapfen 82 aus der Kupplungsaufnahme 70 heraus bewegbar ist.

Die Anhängerkupplung 80 kann bezüglich der Zugfahrzeugkupplung 60 zwar vorzugsweise um die Gelenk-Drehachse GZ drehen, also um eine beim Fahrbetrieb in der Regel etwa vertikale Drehachse, aber auch um Gelenk-Drehachsen GX und GY, also um eine Längsachse und eine Querachse, die insbesondere in Fahrzeuglängsrichtung des Zugfahrzeugs Z bzw. orthogonal rechtwinkelig zur Fahrzeuglängsrichtung des Zugfahrzeugs Z verlaufen.

Wenn die Anhängerkupplung 80 an die Zugfahrzeugkupplung 60 angekuppelt ist, kann das Kuppelgegenelement 81 relativ zum Kuppelelement 61 in Bezug auf die Gelenk-Drehachsen GX, GY und GZ drehen oder schwenken, so dass das Kuppelelement 61 und das Kuppelgegenelement 81 ein Gelenk 95 bilden. Das Kuppelgegenelement 81 und das Kuppelelement 61 sind in einem Lagerbereich 96 in lagerndem Eingriff miteinander. Der Lagerbereich 96 ist vorzugsweise etwa zylindrisch.

Beispielsweise kann das Anhängerfahrzeug A bei einer Kurvenfahrt relativ zum Zugfahrzeug Z im Wesentlichen um die Gelenk-Drehachse GZ schwenken. Das Anhängerfahrzeug A kann aber auch relativ zum Zugfahrzeug Z bei einer Wankbewegung oder Rollbewegung um die Gelenk-Drehachse GX und/oder bei einer Nickbewegung um die Gelenk-Drehachse GY schwenken oder drehen.

In all diesen Fällen ist es möglich, ein Schwenken bzw. ein Drehen des Anhängerfahrzeugs A relativ zum Zugfahrzeug Z um die Gelenk-Drehachse GZ zu ermitteln, nämlich anhand einer Sensorvorrichtung 10.

Die Sensorvorrichtung 10 ist in einem Aufnahmeraum 67 unterhalb der Kupplungsaufnahme 70 aufgenommen. Der Aufnahmeraum 67 ist ein ohnehin bei einer Norm-Sattelkupplung 60A vorhandener Aufnahmeraum, d.h. eine bauliche Modifikation ist nicht notwendig.

Die Sensorvorrichtung 10 ist zu einer Drehmitnahme durch das Kuppelgegenelement 81 vorgesehen, welches zu diesem Zweck eine Mitnahmefläche 90 aufweist. Die Mitnahmefläche 90 ist beispielsweise durch die Stirnseite 88 gebildet oder an dieser vorgesehen. Aber auch die Aufgleitschräge 89 oder ein sonstiger Bereich der Außenumfangskontur 86 können die Mitnahmefläche 90 ganz oder teilweise bilden, was noch deutlicher wird.

Die Sensorvorrichtung 10 weist einen Mitnehmer 20 auf, der durch das Kuppelgegenelement 81, nämlich den Zapfen oder Sattelzapfen 82, mitnehmbar und um eine Mitnahme-Drehachse M drehbar ist.

Der Mitnehmer 20 weist eine Mitnahmefläche 21 zur Herstellung eines Mitnahmekontaktes oder einer Mitnahmeverbindung mit dem Zapfen 82 auf. Die Mitnahmefläche 21 ist an einer freien Stirnseite des Mitnehmers 20 vorgesehen. Von der Mitnahmefläche 21 weg erstreckt sich eine Umfangswand 22, die beispielsweise im Wesentlichen konisch oder zylindrisch verläuft.

Die Mitnahmefläche 21 ist an einer Stirnwand 21A vorgesehen, die im Wesentlichen als plane oder ebene Wand ausgestaltet ist. Von der Stirnwand 21A erstreckt sich die Umfangswand 22 weg.

Die Sensorvorrichtung 10 umfasst einen Sensor 11, beispielsweise einen magnetischen Sensor. Von dem Sensor 11 erzeugte Signale werden von einer Auswerteeinrichtung 12 ausgewertet, die beispielsweise einen Prozessor 13 sowie einen Speicher 14 umfasst. Der Prozessor 13 führt Programmcode von mindestens einem Programm aus, welches die Sensorsignale des Sensors 11 verarbeiten und beispielsweise an eine Schnittstelle 15, insbesondere einen Buskoppler, für ein Bordnetz N des Zugfahrzeugs Z bereitstellt. Die Schnittstelle 15 ist beispielsweise eine CAN-Bus-Schnittstelle, kann aber auch ohne weiteres eine sonstige digitale oder analoge Schnittstelle sein oder umfassen.

Der Mitnehmer 20 ist an einem Lagerkörper 30 drehbar um die Mitnahme-Drehachse M gelagert. Der Lagerkörper 30 umfasst beispielsweise ein zylindrisches Schutzgehäuse 29, in welchem ein Drehachskörper 31 an einem oder mehreren Drehlagern 32 drehbar gelagert ist. Ein vor das Schutzgehäuse 29 vorstehender Abschnitt des Drehachskörpers 31 ist mit dem Mitnehmer 20 drehfest verbunden. Somit kann also der Mitnehmer 20 relativ zu dem Lagerkörper 30 um die Mitnahme-Drehachse M drehen.

Mit dem Drehachskörper 31 sind einer oder mehrere Sensorgeber 25, beispielsweise Magnete, drehfest verbunden, die zur Erregung des Sensors 11 dienen.

Der Mitnehmer 20 ist bezüglich des Kuppelelementes 61, insbesondere der Kupplungsaufnahme 70, durch eine Halteeinrichtung 40 beweglich gelagert.

Der Mitnehmer 20 kann um Drehfreiheitsgrade DX und DY und/oder lineare Bewegungsfreiheitsgrade LX, LY und LZ aus seiner Mittellage ausgelenkt werden. Die Schwenk-Freiheitsgrade oder Drehfreiheitsgrade DX, DY verlaufen orthogonal zu der Mitnahme-Drehachse M und jeweils orthogonal zueinander. Beispielsweise kann der Mitnehmer 20 mit dem Drehfreiheitsgrad DX um eine Achse SX schwenken, die parallel zur Gelenk-Drehachse GX ist. Bei Auslenkung oder Verschiebung mit dem linearen Bewegungsfreiheitsgrad LX kann der Mitnehmer 20 um die zu der Gelenk-Drehachse GX parallele Achse SX linear ausgelenkt werden, also rechtwinkelig zur Mitnahme-Drehachse M bewegt werden.

Der weitere lineare Bewegungsfreiheitsgrad LY erlaubt eine Auslenkung oder Verschiebung des Mitnehmers 20 quer zum Bewegungsfreiheitsgrad LX oder zur X-Achse und/oder entlang einer Achse SY, die zur Gelenk-Drehachse GY parallel ist. Bei einer Drehung um den Drehfreiheitsgrad DY dreht der Mitnehmer 20 um diese zur Gelenk-Drehachse GY parallele Achse SY.

Die Verschieblichkeit mit dem Bewegungsfreiheitsgrad LZ ist parallel oder koaxial zur Mitnahme-Drehachse M vorgesehen.

All die vorgenannten Drehfreiheitsgrade DX, DY oder lineare Bewegungsfreiheitsgrade LX, LY oder LZ ermöglichen es, dass der Mitnehmer 20 beispielsweise beim Ankuppeln der Anhänger-Kupplung 80 an die Zugfahrzeugkupplung 60 aus seiner Mittellage ausgelenkt wird, so dass seine Stirnwand 21A an der Stirnseite 88 bzw. der Stützfläche oder Mitnahmefläche des Zapfens 82 plan parallel zu liegen kommt. Darüber hinaus wird die Drehmitnahmekopplung des Mitnehmers 20 auch bei einer Auslenkung quer zu der Mitnahme-Drehachse M ermöglicht. So schwenkt beispielsweise der Mitnehmer 20 um die mit dem Drehfreiheitsgrad DX oder DY, bleibt aber dennoch in Mitnahmekontakt mit dem Zapfen 82.

In einem Übergangsbereich oder Kantenbereich zwischen der Stirnwand 21A und der Umfangswand 22 ist vorzugsweise eine Schrägfläche oder Einführschräge vorgesehen, an der das Kuppelgegenelement 81 beim Ankuppeln an das Kuppelelement 61, also beispielsweise beim Einführen in die Kupplungsaufnahme 70, entlanggleiten kann. Dabei kann das Kuppelelement 61 den Mitnehmer 20 beispielsweise quer zur Mitnahme-Drehachse M verkippen oder verschwenken und/oder längs der Mitnahme-Drehachse M verstellen.

Die Beweglichkeit des Mitnehmers 20 um die Bewegungsfreiheitsgrade DX, DY, LX, LY und LZ wird durch die Halteeinrichtung 40 bereitgestellt, an der der Lagerkörper 30 fest angeordnet ist, also unbeweglich angeordnet ist.

Die Halteeinrichtung 40 hält den Lagerkörper 30 in Bezug auf die Mitnahme-Drehachse M verdrehfest, ermöglicht jedoch Bewegungen des Lagerkörpers 30 und somit auch des Mitnehmers 20 um die Bewegungsfreiheitsgrade DX, DY sowie die translatorischen Bewegungsfreiheitsgrade oder linearen Bewegungsfreiheitsgrade LX, LY und LZ.

Die Halteeinrichtung 40 umfasst ein Schwenklager 41, welches eine in Bezug auf die Zugfahrzeugkupplung 60 ortsfeste Lagerbasis 42 umfasst. Die Lagerböcke sind beispielsweise von einem Achskörper 43 durchsetzt, der einen Schwenkkörper 44 schwenkbar lagert. Beispielsweise ist der Achskörper 43 am Schwenkkörper 44 und/oder der Lagerbasis 42 schwenkbar gelagert.

An dem Schwenkkörper 44 ist ein weiteres Schwenklager 45 vorgesehen. Die Schwenkachsen R1Y und R2Y der Schwenklager 41, 45 verlaufen parallel zueinander. Mithin sind also die Längsachsen der Achskörper 43, 46 parallel zueinander.

Das Schwenklager 45 dient zur schwenkbaren Lagerung zweier Gelenkstäbe 47, die von dem Schwenkkörper 44 in Richtung des Lagerkörpers 30 abstehen und den Lagerkörper 30 halten.

Die Gelenkstäbe 47 tragen einen Achskörper 48, der einen Träger 35 der Halteeinrichtung 40, an dem der Lagerkörper 30 angeordnet ist, um eine Schwenkachse, die dem Schwenk-Freiheitsgrad DY entspricht, schwenkbar lagert. Somit kann also der Lagerkörper 30 um die Schwenkachse DY schwenken, wird jedoch in Bezug auf die Mitnahme-Drehachse M von dem Träger 35 drehfest gehalten. Zur Bereitstellung der weiteren Bewegungsfreiheitsgrade LX, LY und LZ sind die Gelenkstäbe 47 kugelgelenkig mit den Achskörpern 46 und 48 verbunden, nämlich anhand von Kugelgelenken 47A, 47B, 47C und 47D. Die Kugelgelenke 47A - 47D ermöglichen weitere rotatorische Bewegungsfreiheitsgrade oder Schwenk-Freiheitsgrade R2X, R3X, R4X, R5X sowie R2Z, R3Z, R4Z und R5Z.

An dieser Stelle ist allerdings zu erwähnen, dass beispielsweise auch eine kardanische gelenkige Lagerung anstelle der Kugelgelenke 47A - 47D möglich wäre.

Die Gelenkstäbe 47 sowie die Achskörper 46, 48 definieren mit ihren Schwenkgelenken, nämlich den Kugelgelenken 47A - 47D an ihren Verbindungsbereichen, ein Viergelenk 147 und/oder ein Gelenk-Parallelogramm.

Zu erwähnen ist weiterhin, dass für die Schwenk-Freiheitsgrade oder Dreh-Freiheitsgrade DY sowie R2Y bereits das Schwenklager 45 sowie ein Schwenklager 49, welches den Achskörper 48 umfasst, ausreichend sind. Zudem ist es möglich, dass die Schwenklager 45, 49 eine Verschieblichkeit und somit einen translatorischen Bewegungsfreiheitsgrad ermöglichen. Wenn also beispielsweise die Achskörper 46, 48 in Bezug auf diejenige Komponente, an der sie drehbar angeordnet sind, verschieblich sind, nämlich bezüglich des Schwenkkörpers 44 und bezüglich des Trägers 35, sind dadurch translatorische Bewegungsfreiheitsgrade LY ohne weiteres realisierbar.

Die Schwenklager 41, 45, 49 bilden eine Schwenklageranordnung 141, die eine translatorische Bewegung oder einen translatorischen Bewegungsfreiheitsgrad des Mitnehmers 20 ermöglichen, nämlich den Bewegungsfreiheitsgrad LX. Der Mitnehmer 20 ist also nur anhand von Schwenklagern 41, 45, 49 schwenkbar gelagert, um einen translatorischen Bewegungsfreiheitsgrad zu realisieren. Die Schwenkachsen der Schwenklager 41, 45, 49 sind zueinander parallel.

Auch der translatorische Bewegungsfreiheitsgrad LY ist ausschließlich durch Schwenklager realisiert, nämlich durch die Kugelgelenke 47A - 47D.

An dieser Stelle sei aber erwähnt, dass die magnetischen Messprinzipien oder Sensor-Prinzipien der Sensorvorrichtung 10 nicht die einzige Ausführungsform sind. Bei einer erfindungsgemäßen Sensorvorrichtung können beispielsweise induktive, kapazitive oder optische Sensoren, auch in Kombination, vorgesehen sein. So können beispielsweise anstelle der als Magnete ausgestalteten Sensorgeber 25 optische Markierungen, insbesondere Striche oder dergleichen, vorgesehen sein, die durch einen optischen Sensor 11 erfassbar sind. Auch eine kapazitive Erfassung ist ohne weiteres möglich, wenn beispielsweise entsprechende elektrische Felder durch die Sensorgeber bereitgestellt werden.

Anstelle der Sensorgeber 25 können auch sonstige Sensorelemente oder Sensoren vorgesehen sein. Mithin kann also die sensorische Erfassung einer Relativposition eines Mitnehmers relativ zu einem Träger oder Lagerkörper auch durch mindestens einen Sensor realisiert sein, der am Mitnehmer angeordnet ist und somit relativ zum Lagerkörper oder Träger um die Mitnahme-Drehachse dreht.

Die Mitnehmer 20 können ganz oder teilweise aus einem elastischen Material, beispielsweise einem flexiblen Kunststoff, Gummi oder dergleichen bestehen.

Insbesondere vorteilhaft ist eine elastische Nachgiebigkeit im Bereich der Mitnahmefläche 21.

Die Stirnwand 21A ist vorzugsweise als eine Reibschlussfläche ausgestaltet oder weist eine Reibschlussfläche auf. Beispielsweise sind Korund-, Quarz-, Gesteinspartikel oder dergleichen anderes hartes Material mit scharfen Bruchkanten und jedenfalls Spitzen oder dergleichen an der Reibschlussfläche vorgesehen.

Der Mitnehmer 20 weist vorzugsweise einen Magneten 23 oder eine sonstige Magnetanordnung zur Bereitstellung einer den Mitnehmer 20 in Richtung des Kuppelgegenelements 81 beaufschlagenden magnetischen Anziehungskraft auf. Es ist möglich, dass der Mitnehmer 20 als Ganzes durch den Magneten 23 gebildet ist oder dass der Magnet 23 in einen Grundkörper des Mitnehmers 20 eingebettet ist.

Zusätzlich möglich, jedoch in der Zeichnung nicht dargestellt, ist eine Anfederung des Mitnehmers 20 in einem Sinne von dem Lagerkörper 30 weg und/oder in Richtung des Kuppelgegenelements 81.

Der Mitnehmer 20 ist in einer Mitnahmestellung in Mitnahmekontakt mit dem Gegenkoppelelement 81. In einer Freigabestellung hingegen ist der Mitnehmer 20 von dem Kuppelgegenelement 81 entfernt, so dass das Kuppelgegenelement 81 den Mitnehmer 20 nicht mitnehmen kann. Die Freigabestellung ist insbesondere zum Ankuppeln der Anhänger-Kupplung 80 an die Zugfahrzeugkupplung 60 vorgesehen, während die Mitnahmestellung des Mitnehmers 20 dann eingestellt wird, wenn das Kuppelgegenelement 81 mit dem Kuppelelement 61 in Eingriff, also angekuppelt ist.

Zur Verstellung des Mitnehmers 20 zwischen der Mitnahmestellung und der Freigabestellung ist ein Stellantrieb 50 vorgesehen. Der Stellantrieb 50 umfasst Stellkörper 51, beispielsweise Stellarme oder Gabelarme, die an einem Schwenklager 52 schwenkbar gelagert sind. Das Schwenklager 52 ist beispielsweise neben dem Schwenkkörper 44 angeordnet. Die Schwenkarme oder Stellarme der Stellkörper 51 verlaufen gabelartig seitlich neben den Gelenkstäben 47 und können sozusagen den Lagerkörper 30 untergreifen, um ihn in Richtung des Kuppelgegenelements 81 anzuheben.

Das Schwenklager 52 umfasst eine Lagerbasis 52A, die beispielsweise einen oder mehrere Lagerböcke aufweist, an denen ein Lagerachselement 52B gehalten ist. Die Stellkörper 51, also die Stellarme, sind mit Lagerenden mit dem Lagerachselement 52B verbunden, beispielsweise drehbar verbunden. Es ist auch möglich, dass das Lagerachselement 52B an der Lagerbasis 52A schwenkbar gelagert ist.

Eine Federanordnung 53 belastet die Stellkörper 52 in Richtung der Mitnahmestellung des Mitnehmers 20, also beispielsweise nach vertikal oben. Die Federanordnung 53 umfasst eine Feder 53A, die beispielsweise an der Lagerbasis 52A oder einem die Lagerbasis 52A tragenden Körper abgestützt ist und zudem an einem Stützkörper 53B abgestützt ist, der sich zwischen den Stellkörpern 51 oder den Stellarmen erstreckt.

Der Träger 35 weist Schenkel 36, 37 auf, zwischen denen der Lagerkörper 30 gehalten ist. An dem von dem Mitnehmer 20 entfernteren, in der Zeichnung also unteren Schenkel 36, ist das Schwenklager 49 vorgesehen. Der Schenkel 36 bildet zudem einen Koppelabschnitt zur Ankopplung des Stellantriebs 50. An dem Schenkel 36 sind Antriebskörper 38, 39 angeordnet. Der Antriebskörper 38 bildet sozusagen einen Stütz-Antriebskörper, der zur Abstützung an den Stellkörpern 51 vorgesehen ist. An den Stellkörpern 51 sind für den Antriebskörper 38 Vertiefungen oder Mitnahmeaufnahmen 51A vorgesehen, in die der Antriebskörper 38 eingreifen kann, wenn die Stellkörper 58 den Träger 35 in Richtung des Kuppelgegenelements 81 anheben.

Der Antriebskörper 39 bildet sozusagen einen Zug-Antriebskörper für den Stellantrieb 50, anhand dessen der Stellantrieb 50 den Träger 35 von dem Kuppelgegenelement 81 weg in Richtung der Freigabestellung bewegen, insbesondere ziehen kann.

Die Antriebskörper 38, 39 sind beispielsweise in der Art von Stützstäben oder Stützelementen ausgestaltet. Der Antriebskörper 38 steht an einander entgegengesetzten Seiten vor den Schenkel 36 in Richtung der Stellkörper 51 vor. Der Antriebskörper 38 steht beispielsweise in Richtung der Federanordnung 52 in einen Zwischenraum zwischen die Stellkörper 51 vor.

Der Stellantrieb 50 umfasst einen Antriebsstrang 55 mit einem elektrischen Antriebsmotor 55A, der über ein Getriebe 55B einen Abtrieb 55C antreibt. Der Antriebsmotor 55A kann in einander entgegengesetzte Richtungen, oszillierend hin und her bewegt werden. Der Abtrieb 55C ist beispielsweise in der Art einer Abtriebswelle ausgestaltet. Der Abtrieb 55C ist an einer Abstützung 55D im Abstand zu dem Getriebe 55B drehbar gelagert und abgestützt.

Der Abtrieb 55C treibt ein Seilzuggetriebe oder Riemengetriebe 58 an. Das Riemengetriebe 58 umfasst Zugorgane 58A und 58B, die jeweils einerseits mit dem Abtrieb 55C verbunden sind. Am anderen Längsende ist das Zugorgan 58A mit dem Zug-Antriebskörper 39 verbunden, das Zugorgan 58B mit einem oder beiden Stellkörpern 51.

Wenn das Zugorgan 58B auf den Abtrieb 55C aufgewickelt wird, übt das Zugorgan 58B eine Zugkraft auf den mindestens einen Stellkörper 51 aus, so dass dieser entgegen der Kraft der Federanordnung 53 in Richtung der Freigabestellung betätigt wird.

Wenn jedoch das Zugorgan 58B sozusagen von dem Abtrieb 55C abgewickelt wird, gibt er die Stellkörper 51 frei, so dass die Federanordnung 53 die Stellkörper 51 in Richtung der Mitnahmestellung verstellen kann, so dass letztlich der Träger 35 und somit der Mitnehmer 20 in die Mitnahmestellung verstellt werden.

Zum Verstellen des Mitnehmers 20 und des Lagerkörpers 30 aus der Mitnahmestellung in die Freigabestellung, d.h. vom Kuppelgegenelement 81 weg, dreht der Abtrieb 55C derart, dass er das Zugorgan 58A aufwickelt, gleichzeitig das Zugorgan 58B abwickelt, so dass er den Träger 35 und somit den Lagerkörper 30 von der Mitnahmestellung in Richtung der Freigabestellung betätigt. Zudem wirkt der Träger 35 über die Stütz-Antriebskörper 38 auf die Stellkörper 51 in einem Sinne von der Mitnahmestellung in die Freigabestellung.

Es ist vorteilhaft, dass der Stellantrieb 50 den Mitnehmer 20 auch dann zwischen der Mitnahmestellung und der Freigabestellung verstellen kann, wenn das Kuppelgegenelement 81 in Eingriff mit dem Kuppelelement 61 ist. Zur Steuerung des Stellantriebs 50 ist eine Steuerungseinrichtung 56 vorgesehen.

Die Steuerungseinrichtung 56 ist beispielsweise eine Mikroprozessorsteuerung, wobei auch eine analoge, beispielsweise logische Schaltglieder aufweisende Steuerung, ohne weiteres möglich wäre. Ein Prozessor 56A und ein Speicher 56B der Steuerungseinrichtung sind intern miteinander verbunden, wobei mindestens ein im Speicher 56B gespeichertes Steuerprogramm 56C vom Prozessor 56A ausgeführt werden kann, so dass er die nachfolgend noch erläuterten Funktionen ausführt.

Zur Kommunikation mit beispielsweise dem Stellantrieb 50, insbesondere dem Stellmotor oder Antriebsmotor 55A, sowie mit einem Sensor 57 dient eine Ein-/Ausgabeschnittstelle 56D der Steuerungseinrichtung 56.

Beispielsweise erfasst der Sensor 57 eine Position des Kuppelgegenelements 81 relativ zum Kuppelelement 61, um auf diesem Wege festzustellen, dass das Kuppelgegenelement 81 mit dem Kuppelelement 61 in Eingriff, nämlich in einer Kupplungsstellung ist. Es ist aber auch möglich, dass der Sensor 57 beispielsweise eine Position des Verriegelungskörpers 76, z.B. seine Schließposition erfasst. Beispielsweise kann die Steuerungseinrichtung 56 dann, wenn der Verriegelungskörper 76 von seiner Freigabestellung in seine Verriegelungsstellung verstellt wird, den Mitnehmer 20 und den Lagerkörper 30 von der Freigabestellung in die Mitnahmestellung verstellen. Wenn jedoch der Verriegelungskörper 76 von seiner Verriegelungsstellung in Richtung einer zum Abkuppeln des Anhängers A vorgesehenen Freigabestellung verstellt wird, steuert die Steuerungseinrichtung 56 den Antriebsmotor 55A zur Verstellung von der Mitnahmestellung in die Freigabestellung an.

Ohne weiteres möglich wäre aber auch, dass beispielsweise der Verriegelungsantrieb 77 mit der Steuerungseinrichtung 56 gekoppelt ist, dieser also beispielsweise über eine in der Zeichnung nicht dargestellte Meldeleitung signalisiert, ob der Verriegelungsantrieb 77 von der Verriegelungsstellung in die Freigabestellung oder umgekehrt angesteuert wird.

Bei einem Stellantrieb 150 ist der Lagerkörper 30 und somit auch der Mitnehmer 20 durch eine Federanordnung 155 in Richtung der Mitnahmestellung belastet. Eine Feder 155A ist beispielsweise an einer fahrzeugfesten Stütze 155B, z.B. dem Stützkörper 72, abgestützt und belastet den Lagerkörper 30 in Richtung des Kuppelgegenelements 81. An dem Lagerkörper 30 ist eine Rastaufnahme 156D vorgesehen, in die ein Rastkörper 156B mit einem Rastvorsprung 156C eingreift. Der Rastkörper 156B bildet einen Bestandteil einer Rasteinrichtung 156A, die zugleich eine Steuerungseinrichtung 156 für den Stellantrieb 150 darstellt.

Wenn das Kuppelgegenelement 81 mit dem Kuppelelement 61 in Eingriff gebracht wird, betätigt das Kuppelgegenelement die Rasteinrichtung 156 in eine den Stellantrieb 150 freigebende Stellung, in welcher er den Mitnehmer 20 von der Freigabestellung in die Mitnahmestellung betätigt. Beispielsweise gleitet das Kuppelgegenelement 81, insbesondere dessen Flanschkörper 84, an einer Betätigungsfläche oder Betätigungsschräge 156E entlang, wodurch der Rastkörper 156B außer Eingriff mit der Rastaufnahme 156D gebracht wird. Vorzugsweise ist der Rastkörper 156B anhand einer Feder 156F in die Raststellung, d.h. die Eingriffstellung des Rastvorsprungs 156C in die Rastaufnahme 156D, belastet. Die Feder 156F ist beispielsweise an einer Stütze 156G bezüglich der Zugfahrzeugkupplung 60 ortsfest abgestützt.

## Patentansprüche

1. Sensorvorrichtung (10) für eine Zugfahrzeugkupplung (60) oder als Bestandteil einer Zugfahrzeugkupplung (60), mit der ein Anhängerfahrzeug (A), insbesondere ein Sattelauflieger, an ein Zugfahrzeug (Z), insbesondere einen Lastkraftwagen, ankuppelbar ist, wobei die Zugfahrzeugkupplung (60) ein Kuppelelement (61) zur lösbaren Kupplung eines Kuppelgegenelements (81) aufweist, die an dem Zugfahrzeug (Z) und dem Anhängerfahrzeug (A) befestigt oder befestigbar sind und im aneinander gekuppelten Zustand ein Gelenk bildend um mindestens eine Gelenk-Drehachse (GZ) relativ zueinander drehbar sind, wobei die Sensorvorrichtung (10) einen bezüglich des Kuppelelements (61) um eine Mitnahme-Drehachse (M) an einem Lagerkörper (30) drehbar gelagerten und von dem Kuppelgegenelement (81) bei einer Drehung um die mindestens eine Gelenk-Drehachse (GZ) um die Mitnahme-Drehachse (M) dreh-mitnehmbaren Mitnehmer (20) zur Erfassung einer Drehung des Kuppelgegenelements (81) relativ zu dem Kuppelelement (61) um die mindestens eine Gelenk-Drehachse (GZ) aufweist, und wobei die Sensorvorrichtung (10) mindestens einen Sensor (11) zur Erfassung einer jeweiligen Drehposition des Mitnehmers (20) relativ zu dem Lagerkörper (30) bezüglich der Mitnahme-Drehachse (M) aufweist, **dadurch gekennzeichnet, dass** der Mitnehmer (20) bezüglich des Kuppelelements (61) zur Bereitstellung oder Aufrechterhaltung einer Mitnahmekopplung zu dem Kuppelgegenelement (81) mit einem translatorischen Bewegungsfreiheitsgrad anhand einer Schwenklageranordnung (141) beweglich gelagert ist, wobei der Mitnehmer (20) zu einer Verstellung mit dem translatorischen Bewegungsfreiheitsgrad um mindestens zwei Schwenkachsen schwenkt.

2. Sensorvorrichtung nach Anspruch 1, **dadurch gekennzeichnet, dass** der Mitnehmer zu der Verstellung und/oder bei der Verstellung mit dem translatorischen Bewegungsfreiheitsgrad um drei Schwenkachsen der Schwenklageranordnung (141) schwenkt, wobei vorteilhaft vorgesehen ist, dass mindestens zwei Schwenkachsen, vorzugsweise alle Schwenkachsen, der Schwenklageranordnung (141) zur Bereitstellung des translatorischen Bewegungsfreiheitsgrades zueinander parallele Schwenkachsen sind.

3. Sensorvorrichtung nach einem der vorhergehenden Ansprüche, **dadurch gekennzeichnet, dass** der Mitnehmer bei der Verstellung mit dem translatorischen Bewegungsfreiheitsgrad entlang einer Längsachse verstellt wird, wobei die Längsachse quer, insbesondere rechtwinkelig quer, zu der mindestens einen Schwenkachse der Schwenklageranordnung (141) verläuft, und/oder dass der translatorische Bewegungsfreiheitsgrad ein linearer Bewegungsfreiheitsgrad ist, wobei vorteilhaft vorgesehen ist, dass der lineare Bewegungsfreiheitsgrad mindestens eine lineare Bewegungskomponente parallel zur Mitnahme-Drehachse (M) umfasst oder parallel zur Mitnahme-Drehachse (M) verläuft.

4. Sensorvorrichtung nach einem der vorhergehenden Ansprüche, **dadurch gekennzeichnet, dass** der Mitnehmer (20) ausschließlich anhand von Schwenklagern bezüglich des Kuppelgegenelements (81) beweglich gelagert ist, wobei vorteilhaft mindestens zwei Schwenklager vorgesehen sind.

5. Sensorvorrichtung nach einem der vorhergehenden Ansprüche, **dadurch gekennzeichnet, dass** die Schwenklageranordnung (141) mindestens ein nur um eine Drehachse schwenkendes Schwenklager und/oder mindestens ein mehrachsig schwenklagerndes Gelenk, insbesondere ein Kugelgelenk, umfasst.

6. Sensorvorrichtung nach einem der vorhergehenden Ansprüche,-**dadurch gekennzeichnet, dass** der Mitnehmer (20) anhand mindestens eines Viergelenks (147) und/oder eines Gelenk-Parallelogramms bezüglich des Kuppelgegenelements (81) beweglich gelagert ist.

7. Sensorvorrichtung nach einem der vorhergehenden Ansprüche, **dadurch gekennzeichnet, dass** sie eine Magnetanordnung mit mindestens einem Magneten (23) zur Bereitstellung einer den Mitnehmer (20) in Richtung des Kuppelgegenelements (81) beaufschlagenden magnetischen Anziehungskraft aufweist, wobei der Mitnehmer (20) bei Nutzung der Sensorvorrichtung an dem Kuppelgegenelement (81) ausschließlich oder im Wesentlichen durch den mindestens einen Magneten (23) gehalten ist und der Sensor (11) und/oder der Lagerkörper (30) durch den Magneten (23) an dem Kuppelgegenelement (81) gehalten ist.

8. Sensorvorrichtung nach einem der vorhergehenden Ansprüche, **dadurch gekennzeichnet, dass** der Lagerkörper (30) mit drei zueinander winkeligen translatorischen oder linearen Bewegungsfreiheitsgraden sowie mit zwei von der Drehbarkeit um die Mitnahme-Drehachse (M) verschiedenen Dreh-Bewegungsfreiheitsgraden bezüglich des Kuppelelements (61) beweglich gelagert und in Bezug auf die Mitnahme-Drehachse (M) bezüglich des Kuppelelements (61) drehfest festgelegt ist.

9. Sensorvorrichtung nach einem der vorhergehenden Ansprüche, **dadurch gekennzeichnet, dass** sie einen Stellantrieb (50; 150) zur Verstellung zumindest des Mitnehmers (20) zwischen einer näher zu dem Kuppelgegenelement (81) hin verstellten Mitnahmestellung und einer von dem Kuppelgegenelement (81) entfernteren Freigabestellung aufweist, wobei der Stellantrieb (50; 150) anhand einer Steuerungseinrichtung (56; 156) zur Verstellung des Mitnehmers (20) ansteuerbar ist, wobei vorteilhaft vorgesehen ist, dass die Steuerungseinrichtung (56; 156) zur Ansteuerung des Stellantriebs (50; 150) derart ausgestaltet ist, dass er den Mitnehmer (20) zwischen der Freigabestellung und der Mitnahmestellung verstellt, wenn das Kuppelelement (61) mit dem Kuppelgegenelement (81) in Eingriff ist, und/oder dass der Mitnehmer (20) in der Mitnahmestellung in Kontakt mit dem Kuppelgegenelement (81) und in der Freigabestellung außer Kontakt mit dem Kuppelgegenelement (81) oder mit geringerer Kraft in Richtung des Kuppelgegenelements (81) beaufschlagt ist als in der Mitnahmestellung und/oder dass der Stellantrieb (50; 150) einen insbesondere mindestens einen Stellarm aufweisenden Stellkörper (51) zum Verstellen des Mitnehmers (20) und/oder des Lagerkörpers (30) zwischen der Mitnahmestellung und der Freigabestellung aufweist, wobei vorteilhaft vorgesehen ist, dass der Stellkörper (51) nach der Verstellung des Mitnehmers (20) oder des Lagerkörpers (30) in eine von dem Mitnehmer (20) oder dem Lagerkörper (30) entfernte Ruhestellung, insbesondere außer Eingriff mit dem Mitnehmer (20) und/oder dem Lagerkörper (30), verstellbar ist, in der der Stellkörper (51) eine Beweglichkeit des Mitnehmers (20) oder des Lagerkörpers (30), insbesondere mit einem von der Drehbarkeit um die Mitnahme-Drehachse (M) verschiedenen Bewegungsfreiheitsgraden, nicht oder weniger behindert.

10. Sensorvorrichtung nach Anspruch 9, **dadurch gekennzeichnet, dass** der Stellantrieb (50; 150) einen elektrischen Antriebsmotor und/oder einen Fluidantrieb, insbesondere einen Druckluft-Antrieb, und/oder einen Federantrieb umfasst oder dadurch gebildet ist und/oder dass der Stellantrieb (50; 150) den Mitnehmer (20) und/oder den Lagerkörper (30) anhand einer Federanordnung dauerhaft in Richtung der Mitnahmestellung belastet und/oder dass die Steuerungseinrichtung (56; 156) eine Rasteinrichtung umfasst oder durch eine Rasteinrichtung gebildet ist, die durch eine Betätigung den Stellantrieb (50; 150) zu der Verstellung zumindest des Mitnehmers (20) zwischen der Mitnahmestellung und der Freigabestellung betätigt, insbesondere zu einer Verstellung von der Freigabestellung in die Mitnahmestellung freigibt, und/oder dass die Steuerungseinrichtung (56; 156) eine elektrische Steuerungseinrichtung (56; 156) zur Ansteuerung des Stellantriebs (50; 150) umfasst oder dadurch gebildet ist und/oder dass die Steuerungseinrichtung (56; 156) mindestens einen Sensor (57) aufweist, wobei die Steuerungseinrichtung (56; 156) anhand eines Sensorsignals des mindestens einen Sensors (57) den Stellantrieb (50; 150) ansteuert, und/oder dass der Stellantrieb (50; 150) zum Verstellen des an der Halteeinrichtung (40) gehaltenen Lagerkörpers (30) zwischen der Freigabestellung und der Mitnahmestellung ausgestaltet ist.

11. Sensorvorrichtung nach einem der vorhergehenden Ansprüche, **dadurch gekennzeichnet, dass** der Mitnehmer (20) bezüglich des Kuppelelements (61) zur Bereitstellung oder Aufrechterhaltung einer Mitnahmekopplung zu dem Kuppelgegenelement (81) mit mehreren von der Drehbarkeit um die Mitnahme-Drehachse (M) verschiedenen Bewegungsfreiheitsgraden, insbesondere anhand einer den Lagerkörper (30) haltenden Halteeinrichtung (40), beweglich gelagert ist, wobei vorteilhaft vorgesehen ist, dass mindestens ein von der Drehbarkeit um die Mitnahme-Drehachse (M) verschiedener Bewegungsfreiheitsgrad mindestens einen Drehfreiheitsgrad (DX, DY) und/oder mindestens einen linearen Bewegungsfreiheitsgrad (LX, LY, LZ) umfasst und/oder dass der Mitnehmer (20) bezüglich des Kuppelelements (61) entlang mindestens einer Verschiebeachse oder Linearachse verschieblich gelagert ist.

12. Sensorvorrichtung nach einem der vorhergehenden Ansprüche, **dadurch gekennzeichnet, dass** sie eine Halteeinrichtung (40) zu einem bezüglich der Mitnahme-Drehachse (M) drehfesten Halten des Lagerkörpers (30) an dem Kuppelelement (61) aufweist, wobei vorteilhaft vorgesehen ist, dass die Halteeinrichtung (40) den Lagerkörper (30) mit mindestens einem zur Bereitstellung oder Aufrechterhaltung der Mitnahmekopplung des Mitnehmers (20) zu dem Kuppelgegenelement (81) geeigneten Bewegungsfreiheitsgrad, der von der Drehbarkeit um die Mitnahme-Drehachse (M) verschieden ist, bezüglich des Kuppelelements (61) lagert.

13. Sensorvorrichtung nach einem der vorhergehenden Ansprüche, **dadurch gekennzeichnet, dass** der Mitnehmer (20) eine von der Mitnahme-Drehachse (M) durchsetzte Stirnfläche (21) aufweist, die zur, insbesondere reibschlüssigen und/oder formschlüssigen, Mitnahme durch das Kuppelgegenelement (81) ausgestaltet und/oder vorgesehen ist, wobei vorteilhaft vorgesehen ist, dass die Stirnfläche (21) des Mitnehmers (20) eine Planfläche ist und/oder dass die Stirnfläche (21) des Mitnehmers (20) und eine Mitnahmefläche (90) an einer Stirnseite (88) des Kuppelgegenelements (81) in der Mitnahmestellung insbesondere flächig aneinander anliegen und/oder dass die Stirnfläche (21) des Mitnehmers (20) in der Mitnahmestellung zur Anlage an einer Mitnahmefläche (90), die an einer dem Mitnehmer (20) gegenüberliegenden Stirnseite (88) des Kuppelgegenelements (81) vorgesehen ist, vorgesehen und ausschließlich mit solchen Flächenabschnitten in Kontakt mit der Mitnahmefläche (90) ist, deren Normalenrichtung parallel zur Mitnahme-Drehachse (M) ist.

14. Sensorvorrichtung nach einem der vorhergehenden Ansprüche, **dadurch gekennzeichnet, dass** der Mitnehmer (20) eine von der Mitnahme-Drehachse (M) durchsetzte Stirnfläche (21) aufweist, die zur ausschließlich reibschlüssigen und/oder magnetischen, Mitnahme durch eine Mitnahmefläche (90) an einer Stirnseite (88) des Kuppelgegenelements (81) ausgestaltet und/oder vorgesehen ist und/oder dass eine von der Mitnahme-Drehachse (M) durchsetzte Stirnseite des Mitnehmers (20) mindestens einen Ring aufweist oder durch den Ring gebildet ist und/oder dass der Mitnehmer (20) ausschließlich zur reibschlüssigen Drehmitnahme durch das Kuppelgegenelement (81) ausgestaltet ist und/oder keine Formschlusskontur zur Drehmitnahme durch das Kuppelgegenelement (81) aufweist und/oder ausschließlich Reibschlussflächen zur reibschlüssigen Mitnahme durch das Kuppelgegenelement (81) aufweist und/oder dass sie Kraftbeaufschlagungsmittel, insbesondere eine Federanordnung (51), zu einer Kraftbeaufschlagung des Mitnehmers (20) in Richtung des Kuppelgegenelements (81) aufweist und/oder dass sie eine Magnetanordnung mit mindestens einem Magneten (23) zur Bereitstellung einer den Mitnehmer (20) in Richtung des Kuppelgegenelements (81) beaufschlagenden magnetischen Anziehungskraft aufweist und/oder dass die oder eine Magnetanordnung zur Betätigung oder Erregung des mindestens einen Sensors (11) ausgestaltet und/oder angeordnet ist und/oder dass sie eine Abschirmungseinrichtung zur Abschirmung des mindestens einen Sensors (11) gegenüber magnetischen Einflüssen der Magnetanordnung aufweist und/oder dass an dem Mitnehmer (20) mindestens eine Reibschlussfläche für einen reibschlüssigen Kontakt mit dem Kuppelgegenelement (81) und/oder mindestens eine Formschlusskontur für einen formschlüssigen Eingriff des Kuppelgegenelements (81) und des Mitnehmers (20) angeordnet ist und/oder dass die Gelenk-Drehachse (GZ) und die Mitnahme-Drehachse (M) koaxial sind und/oder miteinander fluchten, wenn das Kuppelelement (61) und das Kuppelgegenelement (81) aneinander gekuppelt sind, und/oder dass die Zugfahrzeugkupplung (60) als Sattelkupplung (60A) ausgestaltet ist und das Kuppelelement (61) eine Kupplungsaufnahme (70), insbesondere ein Kupplungsmaul, zur Aufnahme eines Sattelzapfens (82) des Kuppelgegenelements (81) aufweist oder dass das Kuppelelement (61) eine Kupplungskugel oder einen Kupplungsvorsprung zum Eingriff in eine Kupplungsaufnahme (70) des Kuppelgegenelements (81) aufweist.

15. Zugfahrzeugkupplung (60) mit einer Sensorvorrichtung (10) nach einem der vorhergehenden Ansprüche.

## Claims

1. Sensor device (10) for a towing vehicle coupling (60) or forming part of a towing vehicle coupling (60) with which a trailer vehicle (A), in particular a semi-trailer, can be coupled to a towing vehicle (Z), in particular a lorry, wherein the towing vehicle coupling (60) has a coupling element (61) for releasably coupling a coupling mating element (81), which elements are or can be secured to the towing vehicle (Z) and the trailer vehicle (A), and when coupled can rotate relative to each another about at least one joint rotational axis (GZ), forming a joint, wherein the sensor device (10) has a follower (20) which is mounted on a bearing body (30) such that it can rotate relative to the coupling element (61) about a follower rotational axis (M) and can be rotatably carried about the follower rotational axis (M) by the rotation of the coupling mating element (81) about the at least one joint rotational axis (GZ) in order to sense a rotation of the coupling mating element (81) relative to the coupling element (61) about the at least one joint rotational axis (GZ), and wherein the sensor device (10) has at least one sensor (11) for sensing a respective rotational position of the follower (20) relative to the bearing body (30) in relation to the follower rotational axis (M), **characterised in that** the follower (20) is mounted, with a degree of translatory freedom of movement achieved by a pivot bearing arrangement (141), for movement in relation to the coupling element (61), in order to provide or maintain the coupling of the follower relative to the coupling mating element (81), wherein for said movement the follower (20) pivots about at least two pivot axis with said degree of translatory freedom of movement.

2. Sensor device according to claim 1, **characterised in that** the follower pivots about at least three pivot axes of the pivot bearing arrangement (141), for the adjustment and/or during the adjustment with the translational degree of freedom of movement, wherein it is advantageously provided that at least two pivot axes, preferably all pivot axes, of the pivot bearing arrangement (141) are parallel pivot axes to provide the translational degree of freedom of movement to one another.

3. Sensor device according to any one of the preceding claims, **characterised in that** the follower is adjusted during adjustment with the translational freedom of movement along a longitudinal axis, wherein the longitudinal axis runs transversely, in particular perpendicularly at right angles, to the at least one pivot axis of the pivot bearing arrangement (141), and/or **in that** the translational degree of freedom of movement is a linear degree of freedom of movement, wherein it is advantageously provided, that the linear degree of freedom of movement comprises at least one linear movement component parallel to the follower rotational axis (M) or runs parallel to the follower rotational axis (M).

4. Sensor device according to any one of the preceding claims, **characterised in that** the follower (20) is mounted exclusively by means of pivot bearings so as to move relative to the coupling mating element (81), wherein advantageously at least two pivot bearings are provided.

5. Sensor device according to any one of the preceding claims, **characterised in that** the pivot bearing arrangement (141) comprises at least one pivot bearing pivoting only about an axis of rotation and/or at least one pivoting joint, in particular a ball joint, pivoting on several axes.

6. Sensor device according to any one of the preceding claims, **characterised in that** the follower (20) is movably mounted relative to the coupling mating element (81) by means of at least one four-joint link (147) and/or a joint parallel diagram.

7. Sensor device according to any one of the preceding claims, **characterised in that** it has a magnet arrangement with at least one magnet (23) for providing a magnetic attraction force exerted on the follower (20) in the direction of the coupling element (81), wherein the follower (20) is held exclusively or substantially by the at least one magnet (23) when using the sensor device on the coupling element (81) and the sensor (11) and/or the bearing body (30) is held on the coupling mating element (81) by the magnet (23).

8. Sensor device according to any one of the preceding claims, **characterised in that** the bearing body (30) is movably mounted with three translational or linear degrees of freedom of movement at an angle to one another as well as with two degrees of freedom of movement relative to the coupling element (61) that differ from the rotatability about the follower rotational axis (M) and is rotationally fixed relative to the follower rotational axis (M) relative to the coupling element (61).

9. Sensor device according to any one of the preceding claims, **characterised in that** it has an actuator (50; 150) for adjusting at least the follower (20) between a follower position moved closer to the coupling mating element (81) and a release position further away from the coupling mating element (81), wherein the actuator (50; 150) can be actuated by means of a control device (56; 156) for adjusting the follower (20), wherein it is advantageously provided that the control device (56; 156) for actuating the actuator (50; 150) is designed to move the follower (20) between the release position and the follower position when the coupling element (61) is engaged with the coupling mating element (81) and/or that the follower (20) is applied in the follower position in contact with the coupling mating element (81) and in the release position except in contact with the coupling mating element (81) or with less force in the direction of the coupling mating element (81) than in the follower position and/or that the actuator (50; 150) has a positioning element (51) comprising in particular one adjusting arm for adjusting the follower (20) and/or the bearing body (30) between the follower position and the release position, wherein it is advantageously provided that the positioning element (51) can be adjusted after the adjustment of the follower (20) or the bearing body (30) to a rest position away from the follower (20) or the bearing body (30), in particular without engagement with the follower (20) and/or the bearing body (30), in which the positioning element (51) does not hinder or hinders to a lesser extent a movement of the follower (20) or the bearing body (30), in particular with a degree of freedom of movement different from the rotatability about the follower rotational axis (M).

10. Sensor device according to claims 9, **characterised in that** the actuator (50; 150) comprises or is formed by an electric drive motor and/or a fluid drive, in particular a pneumatic drive, and/or a spring drive and/or **in that** the actuator (50; 150) permanently loads the follower (20) and/or the bearing body (30) by means of a spring arrangement in the direction of the follower position and/or **in that** the control device (56; 156) comprises a latching device or is formed by a latching device, which activates the actuator (50; 150) by actuation for the adjustment of at least the follower (20) between the follower position and the release position, in particular for an adjustment from the release position to the follower position and/or **in that** the control device (56; 156) comprises or is formed by an electrical control device (56; 156) for actuating the actuator (50; 150) and/or **in that** the control device (56; 156) has at least one sensor (57), wherein the control device (56; 156) actuates the actuator (50; 150) by means of a sensor signal from the at least one sensor (57), and/or **in that** the actuator (50; 150) is designed to adjust the bearing body (30) held on the holding device (40) between the release position and the follower position.

11. Sensor device according to any one of the preceding claims, **characterised in that** the follower (20) is mounted such that it moves relative to the coupling element (61) for providing or maintaining a follower coupling to the coupling mating element (81) with a plurality of degrees of freedom of movement different from the rotatability about the follower rotational axis (M), in particular by means of a holding device (40) holding the bearing body (30), wherein it is advantageously provided that at least one degree of freedom of movement different from the rotatability about the follower rotational axis (M) comprises at least one degree of freedom of rotation (DX, DY) and/or at least one linear degree of freedom of movement (LX, LY, LZ) and/or **in that** the follower (20) is mounted so as to displace relative to the coupling element (61) along at least one displacement axis or linear axis.

12. Sensor device according to any one of the preceding claims, **characterised in that** it comprises a holding device (40) for holding the bearing body (30) against rotation with respect to the follower rotational axis (M) on the coupling element (61), wherein it is advantageously provided that the holding device (40) supports the bearing body (30) with at least one degree of freedom of movement suitable for providing or maintaining the follower coupling of the follower (20) to the coupling mating element (81), which is different from the rotatability about the follower rotational axis (M), with respect to the coupling element (61).

13. Sensor device according to any one of the preceding claims, **characterised in that** the follower (20) comprises an end face (21) penetrated by the follower rotational axis (M), which is designed and/or provided for following, in particular in a frictional and/or positive-locking manner, by the coupling mating element (81), wherein it is advantageously provided that the end face (21) of the follower (20) is a flat surface and/or that the end face (21) of the follower (20) and a follower surface (90) lie in particular flat against one another on a front side (88) of the coupling element (81) in the follower position and/or that the end face (21) of the follower (20) in the follower position is arranged for contact on a follower surface (90), which is provided on a front side (88) of the coupling mating element (81) opposite the follower (20), and is exclusively in contact with such surface sections with the follower surface (90), the normal direction of which is parallel to the follower rotational axis (M).

14. Sensor device according to any one of the preceding claims, **characterised in that** the follower (20) has an end face (21) penetrated by the follower rotational axis (M), which is designed and/or provided for following, exclusively in a frictional and/or magnetic manner, by a follower surface (90) on a front side (88) of the coupling mating element (81), and/or **in that** an end face of the follower (20) penetrated by the follower rotational axis (M) comprises at least one ring or is formed by the ring and/or **in that** the follower (20) is designed exclusively for frictional rotational following by the coupling mating element (81) and/or has no positive-locking contour for rotational following by the coupling mating element (81) and/or has exclusively frictional engagement surfaces for friction-locking following by the coupling element (81) and/or **in that** it comprises force-applying means (51), in particular a spring arrangement for a force application of the follower (20) in the direction of the coupling mating element (81) and/or **in that** it has a magnet arrangement with at least one magnet (23) for providing a magnetic attraction force impinging on the follower (20) in the direction of the coupling mating element (81) and/or **in that** the or a magnet arrangement is configured and/or arranged for actuating or exciting the at least one sensor (11) and/or that it has a screening device for screening the at least one sensor (11) against magnetic influences of the magnet arrangement and/or **in that** at least one frictional engagement surface for a frictional contact with the coupling mating element (81) and/or at least one positive locking contour for a positive engagement of the coupling mating element (81) and the follower (20) is arranged on the follower (20) and/or **in that** the joint rotational axis (GZ) and the follower rotational axis (M) are coaxial and/or aligned with one another when the coupling element (61) and the coupling mating element (81) are coupled to one another and/or **in that** the towing vehicle coupling (60) is designed as a fifth wheel coupling (60A) and the coupling element (61) has a coupling receptacle (70), in particular a coupling jaw, for receiving a king pin (82) of the coupling mating element (81) or that the coupling element (61) has a coupling ball or a coupling projection for engagement in a coupling receptacle (70) of the coupling mating element (81).

15. Towing vehicle coupling (60) with a sensor device (10) according to any one of the preceding claims.

## Revendications

1. Dispositif de détection (10) pour un attelage de véhicule tracteur (60) ou faisant partie intégrante d'un attelage de véhicule tracteur (60), avec lequel un véhicule tracté (A), en particulier une semi-remorque, peut être attelé à un véhicule tracteur (Z), en particulier un poids lourd, dans lequel l'attelage de véhicule tracteur (60) présente un élément d'attelage (61) pour l'attelage libérable d'un élément homologue d'attelage (81), qui sont fixés ou peuvent être fixés sur le véhicule tracteur (Z) et le véhicule tracté (A) et dans l'état attelé l'un à l'autre peuvent être amenés en rotation l'un par rapport à l'autre autour d'au moins un axe de rotation d'articulation (GZ) de manière à former une articulation, dans lequel le dispositif de détection (10) présente un entraîneur (20) monté sur un corps de support (30) de manière à pouvoir tourner autour d'un axe de rotation d'entraînement par rapport à l'élément d'attelage (61) et pouvant être entraîné en rotation autour de l'axe de rotation d'entraînement (M) par l'élément homologue d'attelage (81) lors d'une rotation autour de l'au moins un axe de rotation d'articulation (GZ) pour la détection d'une rotation de l'élément homologue d'attelage (81) relativement à l'élément d'attelage (61) autour de l'au moins un axe de rotation d'articulation (GZ), et dans lequel le dispositif de détection (10) présente au moins un capteur (11) pour la détection d'une position de rotation respective de l'entraîneur (20) relativement au corps de support (30) par rapport à l'axe de rotation d'entraînement (M), **caractérisé en ce que** l'entraîneur (20) est monté mobile par rapport à l'élément d'attelage (61) pour la fourniture ou le maintien d'un attelage d'entraînement par rapport à l'élément homologue d'attelage (81) avec un degré de liberté de mouvement en translation à l'aide d'un ensemble de palier pivotant (141), dans lequel l'entraîneur (20) pivote autour d'au moins deux axes de pivotement pour un déplacement avec le degré de liberté de mouvement en translation.

2. Dispositif de détection selon la revendication 1, **caractérisé en ce que** l'entraîneur pour le déplacement et/ou pour le déplacement avec le degré de liberté de mouvement en translation pivote autour de trois axes de pivotement de l'ensemble de palier pivotant (141), dans lequel il est prévu de manière avantageuse qu'au moins deux axes de pivotement, de préférence tous les axes de pivotement, de l'ensemble de palier pivotant (141) pour la fourniture du degré de liberté de mouvement en translation soient des axes de pivotement parallèles les uns aux autres.

3. Dispositif de détection selon l'une quelconque des revendications précédentes, **caractérisé en ce que** l'entraîneur lors du déplacement avec le degré de liberté de mouvement en translation est déplacé le long d'un axe longitudinal, dans lequel l'axe longitudinal s'étend transversalement, en particulier à angle droit transversalement, par rapport à l'au moins un axe de pivotement de l'ensemble de palier pivotant (141), et/ou que le degré de liberté de mouvement en translation est un degré de liberté de mouvement linéaire, dans lequel il est prévu de manière avantageuse que le degré de liberté de mouvement linéaire comprenne au moins une composante de mouvement linéaire parallèle à l'axe de rotation d'entraînement (M) ou s'étende parallèlement à l'axe de rotation d'entraînement (M).

4. Dispositif de détection selon l'une quelconque des revendications précédentes, **caractérisé en ce que** l'entraîneur (20) est monté mobile par rapport à l'élément homologue d'attelage (81) exclusivement à l'aide de paliers pivotants, dans lequel au moins deux paliers pivotants sont prévus de manière avantageuse.

5. Dispositif de détection selon l'une quelconque des revendications précédentes, **caractérisé en ce que** l'ensemble de palier pivotant (141) comprend au moins un palier pivotant pivotant uniquement autour d'un axe de rotation et/ou au moins une articulation montée pivotante multiaxe, en particulier une articulation sphérique.

6. Dispositif de détection selon l'une quelconque des revendications précédentes, **caractérisé en ce que** l'entraîneur (20) est monté mobile par rapport à l'élément homologue d'attelage (81) à l'aide d'au moins d'un quadrilatère articulé (147) et/ou d'un parallélogramme articulé.

7. Dispositif de détection selon l'une quelconque des revendications précédentes, **caractérisé en ce qu'**il présente un ensemble d'aimant avec au moins un aimant (23) pour la fourniture d'une force d'attraction magnétique sollicitant l'entraîneur (20) en direction de l'élément homologue d'attelage (81), dans lequel l'entraîneur (20) lors de l'utilisation du dispositif de détection est retenu sur l'élément homologue d'attelage (81) exclusivement ou sensiblement par l'au moins un aimant (23) et le capteur (11) et/ou le corps de support (30) est retenu sur l'élément homologue d'attelage (81) par l'aimant (23).

8. Dispositif de détection selon l'une quelconque des revendications précédentes, **caractérisé en ce que** le corps de support (30) est monté mobile par rapport à l'élément d'attelage (61) avec trois degrés de liberté de mouvement en translation ou linéaire en angle les uns par rapport aux autres ainsi qu'avec deux degrés de liberté de mouvement en rotation différents de la capacité de rotation autour de l'axe de rotation d'entraînement (M) et immobilisé de manière solidaire en rotation par rapport à l'élément d'attelage (61) vis-à-vis de l'axe de rotation d'entraînement (M).

9. Dispositif de détection selon l'une quelconque des revendications précédentes, **caractérisé en ce qu'**il présente un entraînement de réglage (50 ; 150) pour le déplacement au moins de l'entraîneur (20) entre une position d'entraînement déplacée plus près de l'élément homologue d'attelage (81) et une position de libération plus éloignée de l'élément homologue d'attelage (81), dans lequel l'entraînement de réglage (50 ; 150) peut être commandé à l'aide d'un système de commande (56 ; 156) pour le déplacement de l'entraîneur (20), dans lequel il est prévu de manière avantageuse que le système de commande (56 ; 156) soit conçu pour la commande de l'entraînement de réglage (50 ; 150), de telle sorte qu'il déplace l'entraîneur (20) entre la position de libération et la position d'entraînement, lorsque l'élément d'attelage (61) est en prise avec l'élément homologue d'attelage (81), et/ou que l'entraîneur (20) soit sollicité dans la position d'entraînement en contact avec l'élément homologue d'attelage (81) et dans la position de libération hors de contact avec l'élément homologue d'attelage (81) ou avec une force en direction de l'élément homologue d'attelage (81) moindre que dans la position d'entraînement et/ou que l'entraînement de réglage (50 ; 150) présente un corps de réglage (51) présentant en particulier au moins un bras de réglage pour le déplacement de l'entraîneur (20) et/ou du corps de support (30) entre la position d'entraînement et la position de libération, dans lequel il est prévu de manière avantageuse que le corps de réglage (51) après le déplacement de l'entraîneur (20) ou du corps de support (30) puisse être déplacé dans une position de repos éloignée de l'entraîneur (20) ou du corps de support (30), en particulier hors de prise avec l'entraîneur (20) et/ou le corps de support (30), dans laquelle le corps de réglage (51) n'empêche pas ou empêche moins une mobilité de l'entraîneur (20) ou du corps de support (30), en particulier avec un degré de liberté de mouvement différent de la capacité de rotation autour de l'axe de rotation d'entraînement (M).

10. Dispositif de détection selon la revendication 9, **caractérisé en ce que** l'entraînement de réglage (50; 150) comprend un moteur d'entraînement électrique et/ou un entraînement fluidique, en particulier un entraînement à air comprimé, et/ou un entraînement à ressort ou est formé par ceux-ci et/ou que l'entraînement de réglage (50 ; 150) sollicite l'entraîneur (20) et/ou le corps de support (30) en permanence à l'aide d'un ensemble de ressort en direction de la position d'entraînement et/ou que le système de commande (56 ; 156) comprend un système d'encliquetage ou est formé par un système d'encliquetage, qui par un actionnement actionne l'entraînement de réglage (50; 150) pour le déplacement au moins de l'entraîneur (20) entre la position d'entraînement et la position de libération, en particulier le libère pour un déplacement de la position de libération dans la position d'entraînement, et/ou que le système de commande (56 ; 156) comprend un système de commande (56 ; 156) électrique pour la commande de l'entraînement de réglage (50 ; 150) ou est formé par ceux-ci et/ou que le système de commande (56 ; 156) présente au moins un capteur (57), dans lequel le système de commande (56 ; 156) commande l'entraînement de réglage (50 ; 150) à l'aide d'un signal de capteur de l'au moins un capteur (57), et/ou que l'entraînement de réglage (50 ; 150) est conçu pour le déplacement du corps de support (30) retenu sur le système de retenue (40) entre la position de libération et la position d'entraînement.

11. Dispositif de détection selon l'une quelconque des revendications précédentes, **caractérisé en ce que** l'entraîneur (20) est monté mobile par rapport à l'élément d'attelage (61) pour la fourniture ou le maintien d'un attelage d'entraînement par rapport à l'élément homologue d'attelage (81) avec plusieurs degrés de liberté de mouvement différents de la capacité de rotation autour de l'axe de rotation d'entraînement (M), en particulier à l'aide d'un système de retenue (40) retenant le corps de support (30), dans lequel il est prévu de manière avantageuse qu'au moins un degré de liberté de mouvement différent de la capacité de rotation autour de l'axe de rotation d'entraînement (M) comprenne au moins un degré de liberté de rotation (DX, DY) et/ou au moins un degré de liberté de mouvement linéaire (LX, LY, LZ) et/ou que l'entraîneur (20) soit monté coulissant par rapport à l'élément d'attelage (61) le long d'au moins un axe de coulissement ou axe linéaire.

12. Dispositif de détection selon l'une quelconque des revendications précédentes, **caractérisé en ce qu'**il présente un système de retenue (40) pour une retenue solidaire en rotation du corps de support (30) sur l'élément d'attelage (61) par rapport à l'axe de rotation d'entraînement (M), dans lequel il est prévu de manière avantageuse que le système de retenue (40) supporte le corps de support (30) par rapport à l'élément d'attelage (61) avec au moins un degré de liberté de mouvement adapté à la fourniture ou au maintien de l'attelage d'entraînement de l'entraîneur (20) par rapport à l'élément homologue d'attelage (81), qui est différent de la capacité de rotation autour de l'axe de rotation d'entraînement (M).

13. Dispositif de détection selon l'une quelconque des revendications précédentes, **caractérisé en ce que** l'entraîneur (20) présente une surface frontale (21) traversée par l'axe de rotation d'entraînement (M), qui est conçue et/ou prévue pour l'entraînement, en particulier par friction et/ou coopération de formes, par l'élément homologue d'attelage (81), dans lequel il est prévu de manière avantageuse que la surface frontale (21) de l'entraîneur (20) soit une surface plane et/ou que la surface frontale (21) de l'entraîneur (20) et une surface d'entraînement (90) s'appliquent l'une sur l'autre en particulier de manière plane sur une face frontale (88) de l'élément homologue d'attelage (81) dans la position d'entraînement et/ou que la surface frontale (21) de l'entraîneur (20) dans la position d'entraînement soit prévue pour s'appliquer sur une surface d'entraînement (90), qui est prévue sur une face frontale (88) de l'élément homologue d'attelage (81) opposée à l'entraîneur (20), et soit en contact avec la surface d'entraînement (90), dont la direction normale est parallèle à l'axe de rotation d'entraînement (M), exclusivement avec de telles parties de surface.

14. Dispositif de détection selon l'une quelconque des revendications précédentes, **caractérisé en ce que** l'entraîneur (20) présente une surface frontale (21) traversée par l'axe de rotation d'entraînement (M), qui est conçue et/ou prévue pour l'entraînement exclusivement par friction et/ou magnétique par une surface d'entraînement (90) sur une face frontale (88) de l'élément homologue d'attelage (81) et/ou qu'une face frontale de l'entraîneur (20) traversée par l'axe de rotation d'entraînement (M) présente au moins un anneau ou est formée par l'anneau et/ou que l'entraîneur (20) est conçu exclusivement pour l'entraînement en rotation par friction par l'élément homologue d'attelage (81) et/ou ne présente aucun contour à complémentarité de formes pour l'entraînement en rotation par l'élément homologue d'attelage (81) et/ou présente exclusivement des surfaces de friction pour l'entraînement par friction par l'élément homologue d'attelage (81) et/ou qu'il présente des moyens de sollicitation par une force, en particulier un ensemble de ressort (51) pour une sollicitation par une force de l'entraîneur (20) en direction de l'élément homologue d'attelage (81) et/ou qu'il présente un ensemble d'aimant avec au moins un aimant (23) pour la fourniture d'une force d'attraction magnétique sollicitant l'entraîneur (20) en direction de l'élément homologue d'attelage (81) et/ou que le ou un ensemble d'aimant est conçu et/ou disposé pour l'actionnement ou l'excitation de l'au moins un capteur (11) et/ou qu'il présente un système de blindage pour le blindage de l'au moins un capteur (11) vis-à-vis d'influences magnétiques de l'ensemble d'aimant et/ou qu'au moins une surface de friction pour un contact par friction avec l'élément homologue d'attelage (81) et/ou au moins un contour à complémentarités de forme pour une mise en prise par complémentarité de formes de l'élément homologue d'attelage (81) et de l'entraîneur (20) est disposée sur l'entraîneur (20) et/ou que l'axe de rotation d'articulation (GZ) et l'axe de rotation d'entraînement (M) sont coaxiaux et/ou sont en affleurement l'un avec l'autre, lorsque l'élément d'attelage (61) et l'élément homologue d'attelage (81) sont attelés l'un à l'autre, et/ou que l'attelage de véhicule tracteur (60) est conçu en tant que sellette d'attelage (60A) et l'élément d'attelage (61) présente un logement d'attelage (70), en particulier une mâchoire d'attelage, pour la réception d'un tourillon de sellette (82) de l'élément homologue d'attelage (81) ou que l'élément d'attelage (61) présente une boule d'attelage ou une saillie d'attelage pour l'insertion dans un logement d'attelage (70) de l'élément homologue d'attelage (81).

15. Attelage de véhicule tracteur (60) avec un dispositif de détection (10) selon l'une quelconque des revendications précédentes.
